# EUROPEAN PATENT APPLICATION

(11) **EP 1 657 924 A1**
(43) Date of publication of application: **17.05.2006**
(21) Application number: 05256924.1
(22) Date of filing: 09.11.2005
(51) Int. Cl.: H04N 7/14, H04M 1/663

(54) **Communications apparatus**

(30) Priority: 10.11.2004 JP 2004326609; 05.10.2005 JP 2005292378
(71) Applicant: SHARP KABUSHIKI KAISHA, Osaka-shi, Osaka 545-8522 (JP)
(72) Inventor: Umemoto, Azusa, Souraku-gun Kyoto 619-0200 (JP); Iwai, Toshiyuki, Ichihara-shi Chiba 290-0056 (JP); Toya, Tomoyuki, Ikoma-shi Nara 630-0234 (JP)
(74) Representative: Brown, Kenneth Richard

(57) **Abstract**

In communication with another communications apparatus, the apparatus of the present invention switches communication from one-way mode into two-way mode without any communication break. The apparatus further includes a one-way communication response-permitted apparatus information storage for storing one or more one-way communication response-permitted apparatus information; and a verifying portion for checking whether the sender of the communication initiation request has been registered in the one-way communication response-permitted apparatus information storage. As a result of the reference by the verifying portion, when the sender is found in the one-way communication response-permitted apparatus information storage, the apparatus accepts to start one-way communication with the sender.

## Description

### BACKGROUND OF THE INVENTION

### (1) Field of the Invention

The present invention relates to a communications apparatus for performing communication after establishment of a call by using a call control procedure, and in particular relates to a communications apparatus that enables videophone communication while displaying a television program or the like.

### (2) Description of the Prior Art

Generally, in a communications system using telephones etc., when communication is made between two communications apparatus, a process following the predetermined call control procedure is implemented first between their audio terminals to establish a call, then a voice connection starts. Particularly, since the conventional videophone terminals have been developed as a "video-added telephone", the feeling of use in using the videophone has been almost the same as that of the telephone. Specifically, as one end terminal (the caller side) which makes a call sends out a telephone number, the receiving side's (the callee's) terminal notifies the user of an incoming call by a sound or light alert. As the callee side user answers the incoming call, both the caller and callee receives audio and video communication. This is how the videophone has been developed.

However, in the conventional videophone system realized as above using the telephone metaphor, the callee has to make the mental preparation for answering the videophone within a short period of time from the instant he/she noticed an incoming call. More detailedly, the videophone imposes such a mental burden on the user that he/she must tidy themselves up since it is a terminal that also handles video communication.

To deal with this situation, in a patent literature 1 (Japanese Patent Application Laid-open 2001-169257) discloses a technology in which the callee terminal sends a separately prepared picture instead of transmitting the moving pictures shot by the camera when the callee answers at the beginning of communication and starts to send the moving pictures being taken by the camera only when the user instructs it.

It is true that the configuration of patent literature 1 is able to solve the mental burden problem, but transmission of another moving picture instead of sending the real-time picture shot by the camera, results in implementation of unnecessary data communication.

### SUMMARY OF THE INVENTION

In view of the above circumstances, it is therefore an object of the present invention to provide a communications apparatus which is able to reduce mental burden on the callee user.

In order to achieve the above object, the present invention is configured as follows:

In accordance with the first aspect of the present invention, a communications apparatus for establishing a communication with another apparatus, wherein both sides are able to transmit and receive a plurality of communication media at least including communication video data and communication audio data, includes: a communication request receiver for receiving a communication request; a response-permitted apparatus information storage for storing information as to each apparatus whose communication request is permitted; and a communication controller which, when receiving a communication request, determines whether a communication as to the communication request is authorized and gives permission for the communication when information as to a sender apparatus that has sent the communication request has been registered in the response-permitted apparatus information storage.

With this arrangement, since the permission for the communication is given by automatically checking the validity of communication with a communication partner, it is possible to provide a communications apparatus which can make call control without waiting the caller side user unnecessarily and which is able to reduce mental burden on the callee user.

In accordance with the second aspect of the present invention, in the communications apparatus having the above first aspect, the response-permitted apparatus information storage stores each apparatus whose communication request is permitted, in association with a communication mode including, at least, one of transmission, reception, and transmission and reception modes; and the communication controller, when receiving a communication request including information of requesting the communication mode, gives permission for communication with the sender apparatus that has sent the communication request, in the requested communication mode when in the response-permitted apparatus information storage the sender apparatus is associated with the communication mode requested by the communication request.

With this arrangement, it is possible to automatically select the communication mode depending on the type of communication demanded by the sender of the communication initiation request. That is, it is possible to handle communication initiation requests from other apparatuses, discriminating between that for one-way communication and that for two-way communication and start either one-way communication or two-way communication.

In accordance with the third aspect of the present invention, in the communications apparatus having the above first aspect, the response-permitted apparatus information storage stores each apparatus whose communication request is permitted, in association with communication media that is permitted to communicate therebetween; and the communication controller, when receiving a communication request including information of requesting communication by the communicationmedia, gives permission for communication with the sender apparatus that has sent the communication request, by the requested communication media when in the response-permitted apparatus information storage the sender apparatus is associated with the communication media requested by the communication request.

With this arrangement, it is possible to automatically select the communication media depending on the type of communication demanded by the sender of the communication initiation request. For example, it is possible to handle communication initiation requests from other apparatuses, discriminating between that for audio communication and that for video communication and start either audio communication or video communication.

In accordance with the fourth aspect of the present invention, in the communications apparatus having the above first aspect, the response-permitted apparatus information storage stores each apparatus whose communication request is permitted, in association with a communication mode including, at least, one of transmission, reception, and transmission and reception modes and communication media that is permitted to communicate therebetween; and the communication controller, when receiving a communication request including information of requesting the communication mode and information of requesting communication by the communication media, gives permission for communication with the sender apparatus that has sent the communication request, in the requested communication mode and by the requested communication media when in the response-permitted apparatus information storage the sender apparatus is associated with the communication mode requested by the communication request and the communication media requested by the communication request.

With this arrangement, it is possible to automatically select the communication mode and the communication media depending on the type of communication demanded by the sender of the communication initiation request. For example, it is possible to handle communication initiation requests from other apparatuses, discriminating between that for one-way communication, that for two-way communication, that for audio communication, that for video communication and others, and start any of these communications.

In accordance with the fifth aspect of the present invention, the communications apparatus having any of the above second to fourth aspects further includes: a user instruction receiving portion for receiving input of instructions from a user, wherein the user instruction receiving portion receives the input from the user as to whether the communication requested should be permitted or not when the communication controller rejects the communication request.

Since with this arrangement, the apparatus is able to receive the user's decision on communication permission other than the judgement as to communication validity by the communication apparatus itself, it is possible to start communication by user's judgement even if, for example, the apparatus at the other end has not been registered in the response-permitted apparatus information storage.

In accordance with the sixth aspect of the present invention, in the communications apparatus having the above fifth aspect, the communication controller permits the communication when the communication controller rejects the communication request and when the input of user instructions received by the user instruction receiving portion approves the communication.

Since with this arrangement, the user's designation is given priority even if the communications apparatus rejects communication, it is possible to permit an apparatus that has not been registered in the response-permitted apparatus information storage to start communication based on the user' s decision.

In accordance with the seventh aspect of the present invention, in the communications apparatus having the above sixth aspect, the user instruction receiving portion receives the input of user instructions as to the communication media and/or the communication mode, and the communication controller permits communication by the communication media, or in the communication mode, designated by the user.

Since with this arrangement, the apparatus receives the input of user instructions as to the communicationmedia and/or the communication mode, it is possible to permit an apparatus that has not been registered in the response-permitted apparatus information storage to select the communication media or communication mode based on the user's decision.

In accordance with the eighth aspect of the present invention, in the communications apparatus having any of the above second to fourth aspects, in a case where transmission of the communication media has been performed, but its reception has not been performed with respect to another communications apparatus, when the apparatus receives a communication request for requesting transmission and reception from another communications apparatus, the communication controller determines that the communication is permissible.

With this arrangement, when a one-way call has been established, it is possible to switch the one-way communication into a two-way call in a simple manner and select a preferable communication method flexibly depending on the time and circumstances.

In accordance with the ninth aspect of the present invention, in the communications apparatus having any of the above second to fourth aspects, in a case where transmission of communication audio data has been performed, but its reception has not been performed, with respect to another communications apparatus, when the apparatus receives a communication request for requesting transmission and reception of audio from another communications apparatus, the communication controller determines that the communication is permissible.

With this arrangement, when a one-way call by audio has been established, it is possible to switch the one-way communication into a two-way call in a simple manner and select a preferable communication method flexibly depending on the time and circumstances.

In accordance with the tenth aspect of the present invention, the communications apparatus having any of the above second to fourth aspects, further includes: a user instruction receiving portion for receiving input of instructions from a user; and a transmitter which, when communication of one or more kinds of communication media in the communication mode is designated by the user through the user instruction receiving portion, transmits a communication request for requesting the user-designated communication of the designated communication media in the designated communication mode.

With this arrangement, since the apparatus receives the input of user's instructions as to communication media and communication mode, it is possible to select the communication media and communication mode depending on the user's decision even if another communications apparatus has not been registered in the response-enable apparatus information storage.

In accordance with the eleventh aspect of the present invention, the communications apparatus having any of the above second to fourth aspects further includes: an output portion which, when receiving the communication media from another communication apparatus while presenting non-communication media, switches a presentation of a non-communication media into a presentation of the communication media received from another communication apparatus.

With this arrangement, since if the apparatus receives communication media while presenting non-communication media including content, etc., the apparatus switches the presentation into that of the communication media, the user is able to know the fact of reception of a communication.

In accordance with the twelfth aspect of the present invention, the communications apparatus having any of the above second to fourth aspects further includes: an audio generation and output portion which, when receiving the communication audio data from another communication apparatus while presenting non-communication audio data, outputs the non-communication audio data in mute mode or at low volume level.

With this arrangement, when having received communication audio data, the apparatus outputs the non-communication audio data in mute mode or at low volume level from the audio generation and output portion, it is possible to output the communication audio data in a listenable manner for the user.

In accordance with the thirteenth aspect of the present invention, the communications apparatus having any of the above second to fourth aspects further includes: an audio generation and output portion which, by mixing communication audio data received from another communication apparatus and non-communication audio data received from other than another communication apparatus, outputs the mixed audio.

With this arrangement, when receiving audio data, the apparatus mixes the communication audio data and the non-communication audio data, and outputs the mixed audio from the audio generation and output portion. Therefore, it is possible to output the both the sound of the communication audio data and the sound of the non-communication audio data from the same audio generation and output portion.

In accordance with the fourteenth aspect of the present invention, the communications apparatus having any of the above second to fourth aspects further includes: a first audio generation and output portion for outputting communication audio data received from another communication apparatus; and a second audio generation and output portion for outputting non-communication audio data received from other than another communication apparatus.

With this arrangement, audio output can be done at the same time by the first audio output portion and the second output portion, hence the user able to hear different sounds at the same time.

In accordance with the fifteenth aspect of the present invention, the communications apparatus having any of the above second to fourth aspects further includes: a video display portion which displays communication video data received from another communication apparatus and non-communication video data received from other than another communication apparatus, at the same time, presenting one of the video data mainly and the other in an auxiliary manner.

With this arrangement, the user is able to view both the video images of the communication data and non-communication data, at the same time. Further, the user is able to see, without fail, the video image that is of more importance than the other, by such a designation that the image of more importance is displayed mainly.

Thus, use of the above configurations having been described above makes it possible to provide a communications apparatus which can make call control without waiting the caller side user unnecessarily and which is able to reduce mental burden on the callee user.

Here, the above description of the image display apparatus having a videophone function has been made on the assumption that the non-communication image data is a program obtained through broadcast waves. However, the effect of the present invention is unvaried if the non-communication image data is content received through an Internet, video-tape content and DVD-VIDEO disc content played in the home.

### BRIEF DESCRIPTION OF THE DRAWINGS

FIG. 1 is a constitutional diagram showing one mode of embodiment of a videophone system according to the present invention;
FIG. 2 is an external view showing a television receiver;
FIG. 3 is an external view showing a set top unit;
FIGS. 4A and 4B are external views showing an adapter unit;
FIG. 5 is an external view showing a remote control device;
FIG. 6 is a block diagram showing a videophone system configuration;
FIG. 7 is a block diagram showing a configuration of the adapter unit 4;
FIG. 8 is a sequence diagram showing session establishment of one-way communication and two-way communication between videophone terminals;
FIG. 9 is a flowchart showing a sequence of transactions on the caller's videophone terminal until establishment of a one-way communication session;
FIG. 10 is a flowchart showing a sequence of transactions on the callee's videophone terminal until establishment of a one-way communication session;
FIGS. 11A and 11B are charts showing lists of permission;
FIG. 12 is a table giving the correspondence between media and communication ports;
FIG. 13 is a table giving the correspondence between codecs and media;
FIG. 14 is a table giving the correspondence between codecs and devices;
FIG. 15 is a diagram showing an example of a one-way communication request;
FIG. 16 is a diagram showing an example of a response to a one-way communication request;
FIG. 17 is a view showing a voice-call notice to the callee when a one-way communication call has been established.
FIG. 18 is a view showing a voice-call notice to the caller when a one-way communication call has been established.
FIG. 19 is a flowchart showing a sequence of transactions on the callee's videophone terminal until establishment of a two-way communication session;
FIG. 20 is a flowchart showing a sequence of transactions on the caller's videophone terminal until establishment of a two-way communication session;
FIG. 21 is a diagram showing an example of a communication switching request for switching to two-way communication
FIG. 22 is a diagram showing an example of a response to a two-way communication request;
FIG. 23 is a view showing the display of asking the user to designate the method of communication when a two-way communication is requested;
FIG. 24 is a view of giving a call notice to the callee when a two-way communication call has been established;
FIG. 25 is a flowchart showing the process on the side which sends out a communication switching request;
FIG. 26 is a flowchart showing the process on the side which receives a communication switching request;
FIGS. 27A to 27D are diagrams for explaining continuation of a call by changing the communication media by selecting one or combination of audio and video;
FIGS. 28A to 28C are illustrative views showing a superimposed voice-call notice over a program image;
FIGS. 29A to 29C are illustrative views showing a program image superimposed over a voice-call notice;
FIGS. 30A to 30C are illustrative views showing cases where only a voice-call notice is displayed;
FIGS. 31A to 31D are illustrative views showing cases where a voice-call notice is given by various sound levels;
FIG. 32 is a chart of transitions showing an example of a communication initiation request for two-way communication;
FIG. 33 is an on-screen display example of giving notice and asking the user for a decision when a communication initiation request is received from a party who is not contained in response-permitted terminal information;
FIG. 34 is a chart showing an example of registering procedures for registering a party as a status notice-giving and response-permitted terminal;
FIG. 35 is an example of a communication request when a sender makes a request for two-way audio communication and one-way video communication from his/her own terminal to a receiver; and
FIG. 36 is an example where the receiver receives the communication request shown in FIG. 35 and returns a response to the communication request's sender when the receiver accepts the request.

### DESCRIPTION OF THE PREFERRED EMBODIMENTS

The embodiment mode of the present invention will hereinafter be described in detail with reference to the accompanying drawings.

The following embodiment mode and accompanying drawings will be described taking an example of a relatively large image display device having a videophone function, but terminals having as a small image display function such as PDAs (Personal Digital Assistants) or cellular phones may also be used.

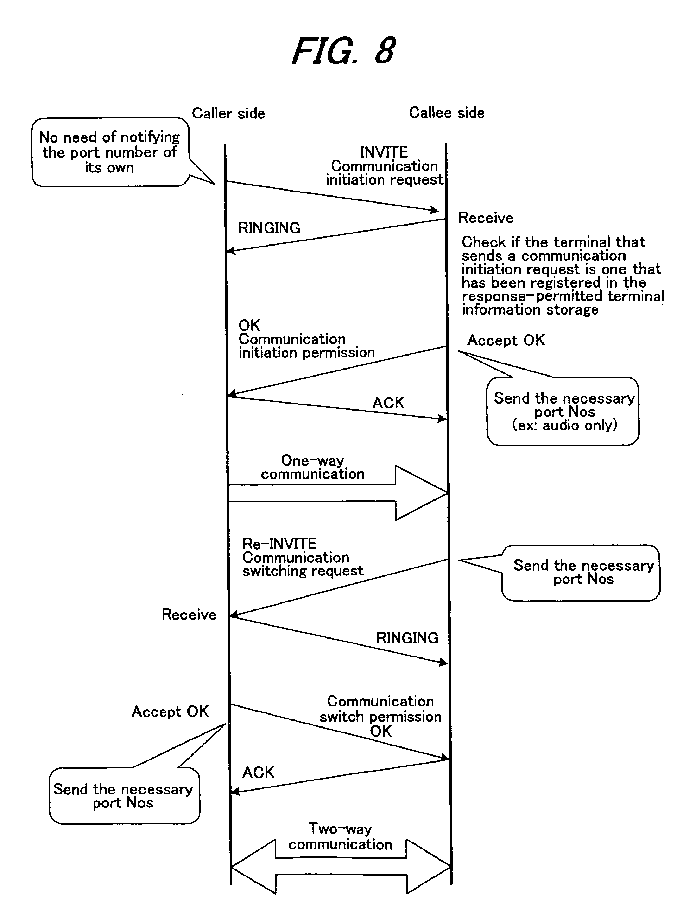

FIG. 8 is a sequence diagram showing session establishment of one-way communication and two-way communication between videophone terminals. Though FIG. 8 contains procedural signals because it is depicted assuming the use of SIP (Session Initiation Protocol), the outline will be described first.

Here, one-way communication refers to transmission of single communication media without reception, or reception of communication media without transmission, at a certain point of time. In other words, this means a communication in which the communication media sent from the first communication terminal is received by the second communication terminal but the communication media sent from the second terminal is not received by the first communication terminal. Specifically, the term "communication media" is assumed to indicate "multimedia" which is represented by audio, images and the like. Though mentioned as one-way communication, the first communication terminal may receive control information other than communication media, transmitted from the second communication terminal. Specific examples of the control information other than communication media include the SIP call control messages as shown in FIG. 8 and others.

In FIG. 8, the first communication terminal and the second communication terminal are assumed to be the caller side and callee side, respectively, but it goes without saying that the first communication terminal may be the callee side and the second communication terminal may be the caller side.

Two-way communication refers to a communication in which the communication media sent from the first communication terminal is received by the second communication terminal and the communication media sent from the second communication terminal is received by the first communication terminal.

As the caller side transmits a communication initiation request "INVITE" for requesting the start of one-way communication to the callee side, the callee side acquires the information as to the party that has transmitted the communication initiation request and checks whether the party that has transmitted the communication initiation request is contained in an aftermentioned response-permitted terminal list. Now, the response-permitted terminal information will be described. "Response-permitted terminal information" means information as to the other-end terminals, one-way communication from which is accepted. The response-permitted terminal list has one or more response-permitted terminal information. Acceptance of one-way communication is analogous to permitting automatic connections of incoming calls in terms of the conventional telephone. That is, granting one-way communication without discrimination to all the received communication initiation requests is similar to granting the automatic connection of incoming calls without discrimination, which is unpreferable from a security viewpoint. When the communications apparatus is videophone, automatic connection of incoming calls without discrimination means that the callee side user is shot by the camera without knowing it, which jeopardizes callee's privacy. To deal with this, as response-permitted terminal information, the other-end persons or terminals to which one-way communication is permitted have been registered previously. Thus, when a one-way communication initiation request is received, the receiver side refers to this response-permitted terminal information and rejects the one-way communication if the call is from a party that is not included in the information, so as to protect security and privacy.

Returning to FIG. 8, when the party that has transmitted a communication initiation request is found on the response-permitted terminal list, the callee side transmits a communication initiation permission "OK" for permitting connection to the caller side. Upon receiving the communication initiation permission, the caller side establishes a one-way call to the callee side to start communication. Thus, using this mode of operation makes it possible for the caller side to set up one-way communication from the caller to callee without waiting for response from the user on the callee side. Also, since no communication from the callee side to the caller side is initiated, no waste of communication occurs. Further, since the time taken from the one-way communication request to establishment of the one-way call of the present invention is shorter than the time required from the two-way communication request to establishment of the two-way communication of the conventional scheme, it can be said that the user on the caller side will not wait longer than was previously the case.

On the other hand, in this one-way communication, since it is not necessary for the caller side to receive communication from the callee side, the caller side does not need to provide knowledge of communication port information to the callee side. Therefore, the caller may send a communication initiation request "INVITE" without involving the communication port information of the terminal of the sender. This feature is convenient because the caller is able to avoid providing the communication port information of its own to an unintended other end even if the caller made transmission of a communication request to a wrong person.

After establishment of the one-way call as above, the communication mode can be switched to the two-way communication mode when either side sends out a two-way communication request. Detailedly, transfer to processing of establishment of a two-way call can be realized when the side which has received the two-way communication request replies with the answer of whether two-way communication is granted. In the present invention, it is assumed particularly that the one-way communication call already established is transferred to two-way communication. When a one-way call is switched into a two-way call, it is possible to switch the call into two-way mode whilst, from the user's viewpoint, the switching into two-way mode is made without disruption of the one-way call. Here, "without disruption" means that the switching of the call from one-way mode to two-way mode is made seamlessly when viewed from the users and does not intend that no disruption should occur in the actual call control procedures.

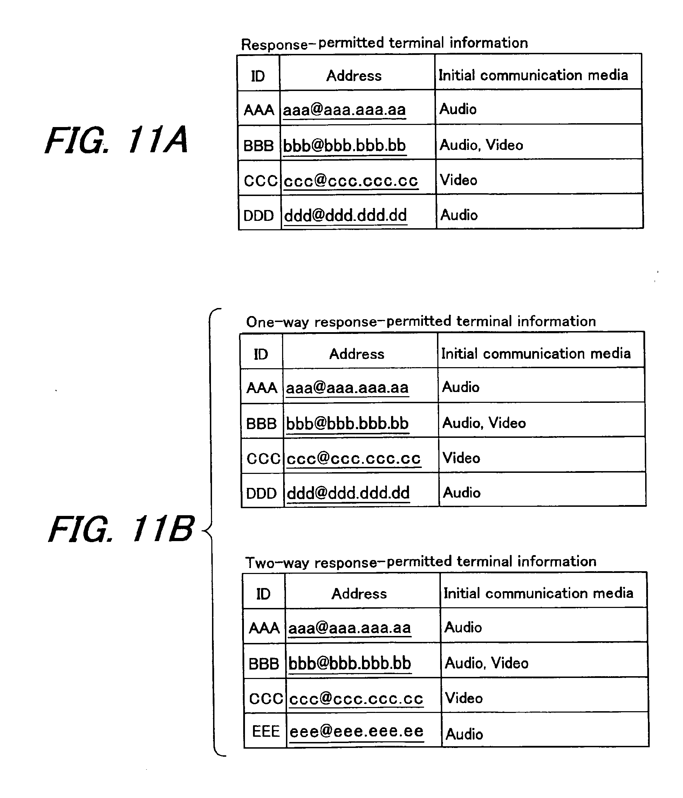

As a variation of the above embodiment mode, the apparatus may be constructed as follows. That is, the apparatus may hold two sets of response-permitted terminal information as shown in FIG. 11B described below, i.e., one-way response-permitted terminal information including the information of terminals from which one-way communication is accepted and two-way response-permitted terminal information including the information of terminals for which two-way communication is permitted. In this case, when the other-end party which has transmitted a communication initiation request "INVITE" is included in the one-way response-permitted terminal information, the apparatus starts one-way communication; when the other-end party is not listed in the one-way response-permitted terminal information but is found in the two-way response-permitted terminal information, the apparatus starts two-way communication; and when the other-end party is not found in either sets of response-permitted terminal information, the apparatus will not start communication. In other words, it is assumed that, depending on the relationship between the caller side user and the callee side user, the user is able to register the other-end parties in either the one-way response-permitted terminal information list or the two-way response-permitted terminal information list. The user is able to select different communication modes for different other-end parties. For example, the user may register those close to the user to some extent in the one-way response-permitted terminal information list so as to permit one-way communication and may register those for whom no privacy need to be considered (babies and young children, pets, etc.) in the two-way response-permitted terminal information list, so as to directly start two-way communication from the beginning instead of going through one-way mode initiation. That is, it is possible to automatically select the optimal communication mode in accordance with the party at the other end to be communicated with.

Up to this point, one-way communication and two-way communication have been described briefly with reference to FIG. 8, a detailed description will be given later.

The video and audio as the communication media to be transmitted and received by one-way communication and two-way communication are to be called communication video data and communication audio data, respectively.

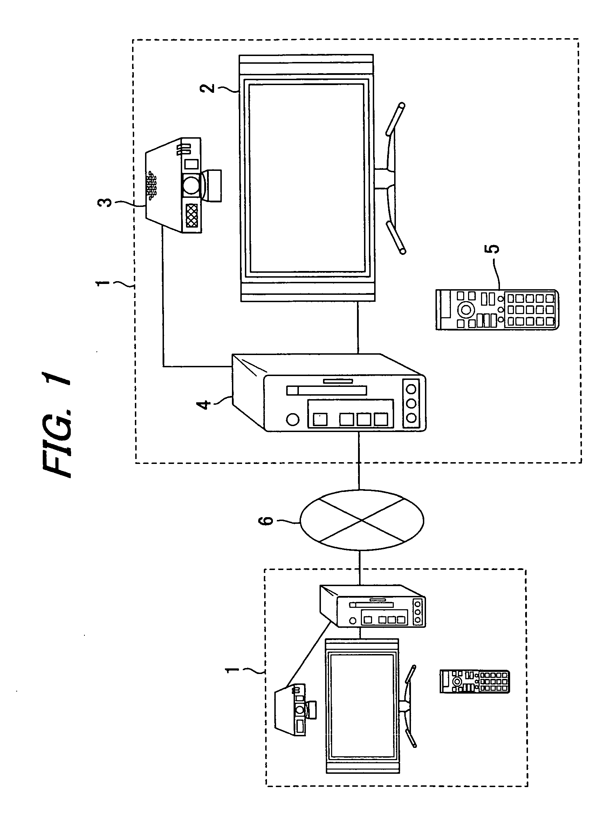

FIG. 1 is a constitutional diagram showing one mode of embodiment of a videophone system including a communications apparatus according to the present invention.

This videophone system is composed of, for example, a plurality of videophone apparatus 1 connected via a network 6. Here in FIG. 1, only two videophone apparatus are depicted, but their number is not limited.

A videophone apparatus 1 is composed of a television receiver 2, a set top unit 3, an adapter unit 4 and a remote control device 5. Though the videophone apparatus 1 of the present embodiment is composed of separate components, i.e., television receiver 2, set top unit 3 and adapter unit 4, being connected by wire, any of two or more components may be combined. Also, transmission of data between these may be implemented by wireless instead of through wire. Remote control device 5 is assumed to use infrared signal transmission, but other kinds of wireless communications may be used, or the control may be made by a wired device.

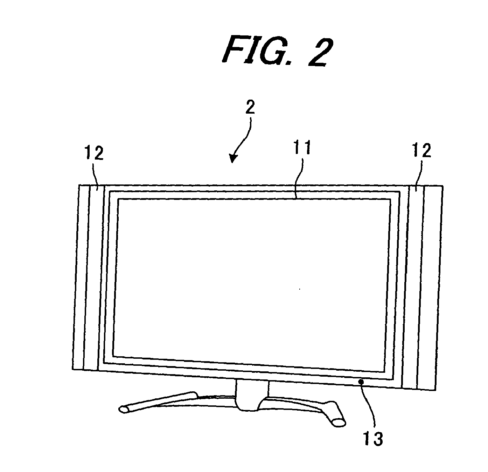

As shown in FIG. 2, television receiver 2 is a LCD television, which is composed of a display (monitor portion) 11 of a LCD panel, speakers 12, a television remote control photoreceiver 13 and the like.

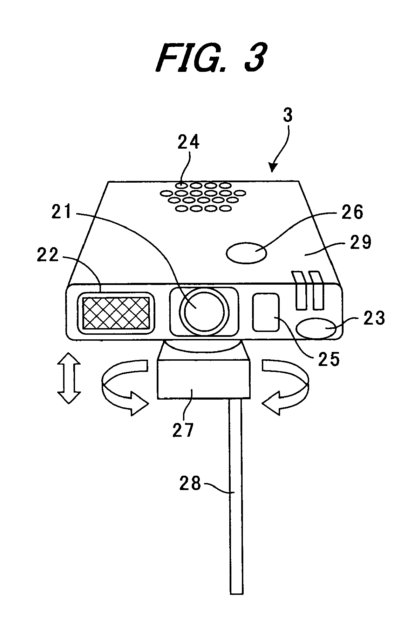

As shown in FIG. 3, set top unit 3 is a unit that is mounted on top of television receiver 2 and provides the videophone function, and includes a camera 21, a microphone 22, a motion detection sensor 23, a speaker (sound output device) 24, an adapter remote control photoreceiver (user instructionreceivingportion) 25, anincomingcallconnection button 26, a pan/tilt mechanism 27 for vertical and horizontal movement, a connection cable 28 to be connected to adapter unit 4 and a status display LED indicator 29.

Camera 21 has the function of shooting forwards from set top unit 3 and converting the image into transmissible communication video data. Microphone 22 has the function of picking up voice and sound from the periphery of set top unit 3 and converting the sound into transmissible communication audio data. Motion detection sensor 23 detects an object that moves in front of set top unit 3. Speaker 24, based on the input audio data, produces audible sound. Adapter R/C photoreceiver 25 receives infrared signals fromremote control device 5 and accepts user instructions. Incoming call connection button 26 is pressed by the user so as to be able to respond when the user answers a call from an other-end party. Pan/tilt mechanism 27 enables set top unit 3 to move vertically and horizontally, or is used to adjust the direction of shooting with camera 21. Connection cable 28 is to exchange data with adapter unit 4. Status display LED indicator 29 is composed of an incoming call lamp for indicating the reception of audio and/or video data and an incoming mail lamp for indicating the reception of a mail and flashes on and off to inform the user when a call or mail is received.

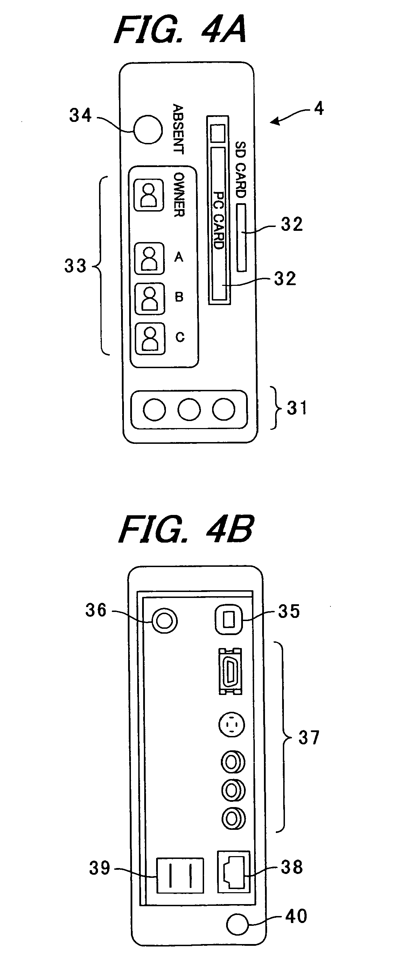

Adapter unit 4 is a device that is connected to television receiver 2, set top unit 3 and network 6 to exchange data. This unit has external input terminals 31, card slots 32, presence lamps 33, an absent button 34 on the front side thereof as shown in FIG. 4A. The rear side includes a connecting terminal 35 for connection with connection cable 28 from set top unit 3, an F-type coupler 36, video connecting terminals 37 for connection with television receiver 11, a LAN terminal 38 for receiving a LAN cable, a TV receiver power supply tap 39 and an AC adapter connecting terminal 40, as shown in FIG. 4B.

External input terminals 31 are to input video and audio from external devices. Card slots 32 are to receive SD cards and PC cards and captures files of still images, moving pictures, voice and sounds etc., recorded on memory cards as recording media. Presence lamps 33 include a my presence lamp for indicating the presence of the user and other-end presence lamps for indicating the presence of other-end parties, allotted as A, B and C. As shown in FIG. 4A, the three other-end presence lamps, designated by A, B and C, represent the presence of the three other-end parties, respectively mapped thereto.

Next, the relationship between presence lamps 33 and the response-permitted terminal information will be explained. As stated above, the response-permitted terminal information is provided to automatically determine whether a communication initiation request should be accepted and includes the information as to other-end parties from which a communication initiation request may be accepted. This information is stored in a response-permitted terminal information storage. Storing an other-end party in thisresponse-permitted terminal information storage, or registering the party as the response-permitted terminal information, means acceptance of one-way communication from that party without any restriction when receiving a communication initiation request from the party. However, there might occur a case where, though the user's terminal has received a communication initiation request from that other-end party, the user cannot answer the call because the user is inconvenienced. To deal with such a situation, if the user's own state, that is, the user being busy or absent, is notified to the designated other-end parties, the user is able to avoid the occurrence of the above case, thus making it possible to accept a communication initiation request from the other-end parties and make communication in a more reliable manner. For this reason, it is preferred that the status of other-end terminals is registered following the predetermined procedures with the prior consent from the other-end users. It goes without saying that the reverse situation is also preferable.

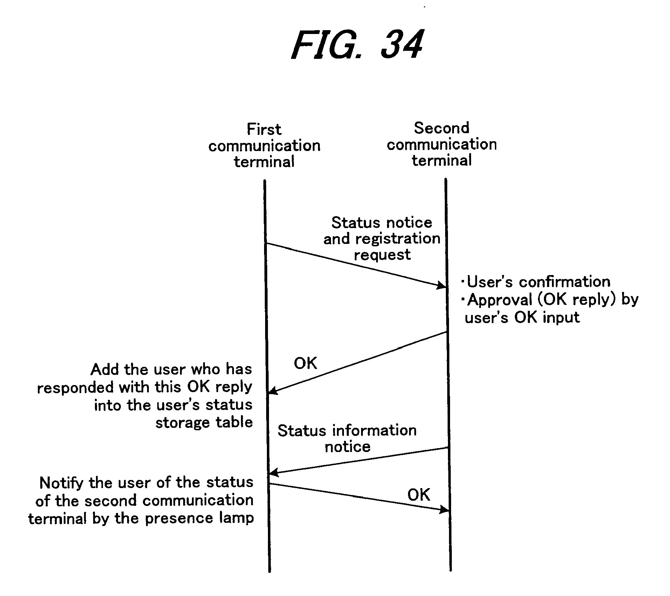

FIG. 34 shows an example of the registering procedures. Here, description is made taking an example where the first communication terminal registers the second communication terminal as a response-permitted terminal information in the response-permitted terminal information storage and also requests a notice of the second terminal status. First, the first communication terminal sends out a status notice and registration request, which includes a request for a notice of the status of the second terminal and a request for its own registration as a terminal from which one-way communication is accepted, to the second communication terminal. When the second communication terminal receives the status notice and registration request, it inquires of its own user whether the status notice and one-way communication calls should be accepted. As approval is input by the user, the second communication terminal sends back the approval of the status notice and registration to the first communication terminal which is the sender of the status notice and registration request. The first communication terminal receives the status notice and registration approval and registers the second communication terminal in the response-permitted terminal information storage.
Thereafter, when the first communication terminal receives information as to any status change or current status from the second communication terminal, the first communication terminal sends back an acknowledgement "safe received " to the second communication terminal, and displays the received status of the second communication terminal to the user by means of presence lamp 33 (e.g., communication-enabled state: lamp on, communication-disabled state: lamp off) . It is of course possible to store the status of the second communication terminal temporarily or over a long period in order to present it on presence lamp 33. This configuration makes it possible for the user of the first communication terminal to start a call at the proper time in accordance with the second communication terminal's user status.

It should be noted that the apparatus of the present invention merely includes presence lamp 33 as a means for displaying the other-end apparatus status. Needless to say, any means other than presence lamp 33 may be used to present the status of the other-end apparatus. For example, if a change in status is received, notice may be given by voice or by display on the screen.

The status notice and registration request in the example of FIG. 34 can be achieved by the code "Subscribe" if based on SIP. As the status information notice for notifying a status, "Notify" can be used.

The term "presence" used here is a concept meaning "state" and "existence", and the presence information of a person may include his/her profile, residence information, schedule and kinds of devices (PCs, cellular phones, PDAs, etc.) that belong to him/her, and also the "status" on the schedule and the "current situations" of the devices. The aforementioned presence lamp 33 has the function of indicating that the owner or the person at the other end is home or in the room.

Pressing absent button 34 (FIG. 4A) once turns the operation status into the absent mode that indicates the user's absence, and pressing once again cancels the absent mode. Connecting terminal 35 (FIG. 4B) is a terminal that receives connection cable 28 from set top unit 3. F-type coupler 36 is a terminal that receives a connecting line from a TV antenna and is joined to an internal TV tuner. Connecting terminals 37 are to output video and audio signals to television receiver 2. LAN terminal 38 is connected to a LAN cable so that the apparatus can be connected to a network via a router, for example. TV receiver power supply tap 39 receives an AC plug from the television. AC adapter connecting terminal 40 is to supply electric power to adapter unit 4.

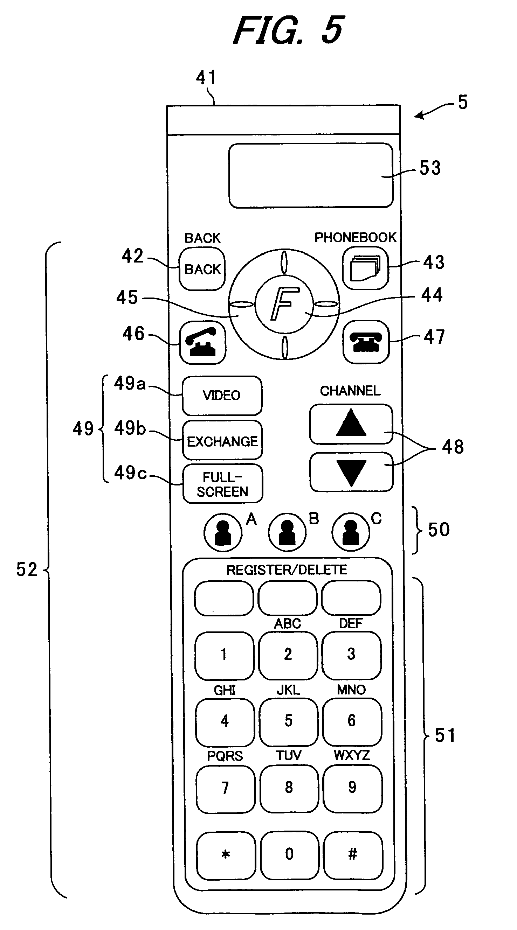

As shown in FIG. 5, remote control device 5 is a device that controls television receiver 2 and set top unit 3 from a distance by infrared signals, and includes a light emitter 41 that emits infrared signals in accordance with input to the remote control device, a control portion 52 and a liquid crystal display 53. Control portion 52 is composed of a back key 42, a phonebook key 43, a decision key 44, directional keys 45, a connect key 4 6, a disconnect key 47, channel switching keys 48, video related keys 49, a voice-call key 50 and numeral/character input keys 51.

Back key 42 is used to go back to the previous menu. Phonebook key 43 is used to call a phonebook frame. Decision key 44 is used to select and determine the item that is highlighted among a plurality of candidates being displayed. Directional keys 45 are used to move the highlight left and right or up and down within the candidate items being displayed. Connect key 46 is used to make a phone call to an endpoint, accept a phone call from an endpoint and answer a voice-call from an endpoint. Disconnect key 47 is used to reject a call from an endpoint, quit a voice-call to an endpoint and stop a voice-call and terminate connection.

Channel switching keys 48 are used to change programs (channels).

Video related keys 49 include a video input key 49a, an exchange key 49b and a full-screen key 49c. Video input key 49a is used when the video to be sent to the other end is switched from the camera input to the input from an external device or from the input from an external device to the camera input. Exchange key 49b is used when the main window and the sub window are exchanged during videophone communication. Full-screen key 49c is used when the output of the sub window is canceled during videophone communication and the main window is displayed full size or when the full-size display is canceled to return to the display of the main window and sub window. Voice-call keys 50 are used when the persons allotted presence lamps 33 (FIG. 4A) are to be called. Numeral/character keys 51 are used to select the channel and input characters.

Voice-call keys 50 are made correspondent to the other ends allotted to presence lamps 33, and when one of voice-call keys 50 is pressed down, a voice-call to the associated endpoint is made. In this way, combination of presence lamp 33 and voice-call key 50 related to each other enables the user to make a casual voice-call by checking the lit status of presence lamps 33 and selecting one who is likely to answer.

It is also possible to provide such an arrangement that a voice-call can be made to an endpoint to which neither presence lamp 33 nor voice-call key 50 is allotted. This can be done, for example, by directly inputting the address of an endpoint using remote control device 5. Alternatively, it is possible to provide an arrangement as follows. That is, one or more terminals or parties at the other end have been previously registered as a communication initiation request recipient terminal information in a communication initiation request recipient terminal information storage. Upon transmission of a communication initiation request, the apparatus, in accordance with user instructions, displays a list of the other end terminals stored in the communication initiation request recipient terminal information storage, and sends out the communication initiation request to the other-end terminal selected by the user.

Here, a "voice-call" means the function of transmitting voice to the other end in the one-way communication mode described with FIG. 8, without reception of audio and video from the other end. More detailedly, the voice-call indicates a process in which a one-way communication call capable of transmitting voice from the caller side to the callee side is set up by the user operation of remote control device 5 in the videophone terminal 1 on the caller side, so as to transfer the voice from the caller user to the callee's videophone terminal 1. The videophone terminal 1 on the callee side will accept establishment of the one-way communication call without any user operation if the call setup request is from one of the terminals contained in the response-permitted terminal list.

The phrase "quit a voice-call" means that, in caller's videophone terminal 1, the user disconnects the one-way communication call by operating remote control device 5. The phrase "stop a voice-call" means that, in callee' s videophone terminal 1, the user disconnects the one-way communication call by operating remote control device 5. The phrase "answer a voice-call" means that, in callee's videophone terminal 1, the user switches the call from one-way communication mode into two-way communication mode by operating remote control device 5. In this case, caller's videophone terminal 1 should grant a shift of the call from one-way communication mode into two-way communication mode without any user operation.

In the description of the present embodiment, the side that sends out a connection request when a one-way communication call is set up is called "caller side" while the side that receives the connection request is called "callee side". Accordingly, the side that sends out a request for switching the communication from a one-way call to a two-way call when the mode is changed from one-way communication to two-way communication is not necessarily limited to the caller side. On the contrary in the present invention, in most cases the callee's videophone terminal 1 will be referred to as the side that sends out a request for switching the communication from a one-way call to a two-way call, so care should be taken.

Network 6 may be the Internet, or may be a network such as LAN, WAN or the like. In the present embodiment, the devices are connected by wire but they may be connected by wireless or other means.

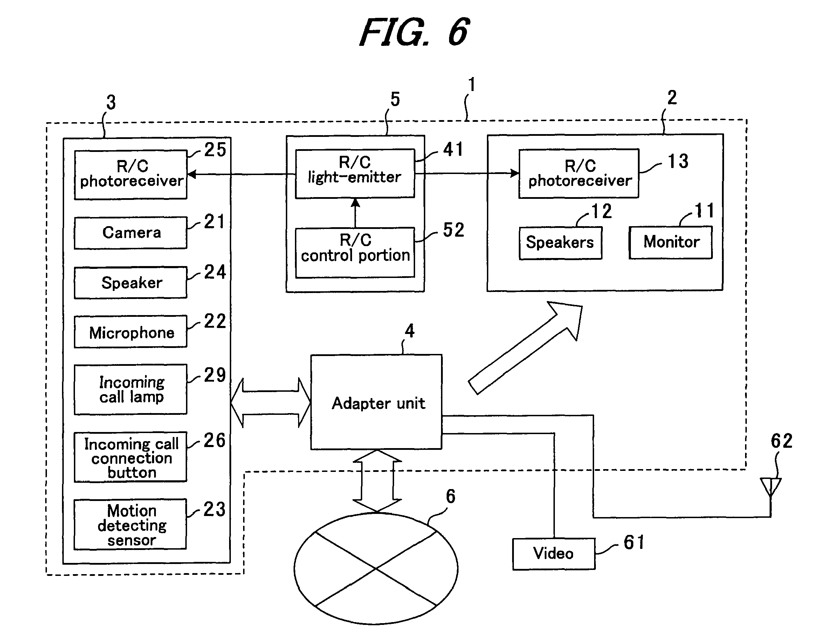

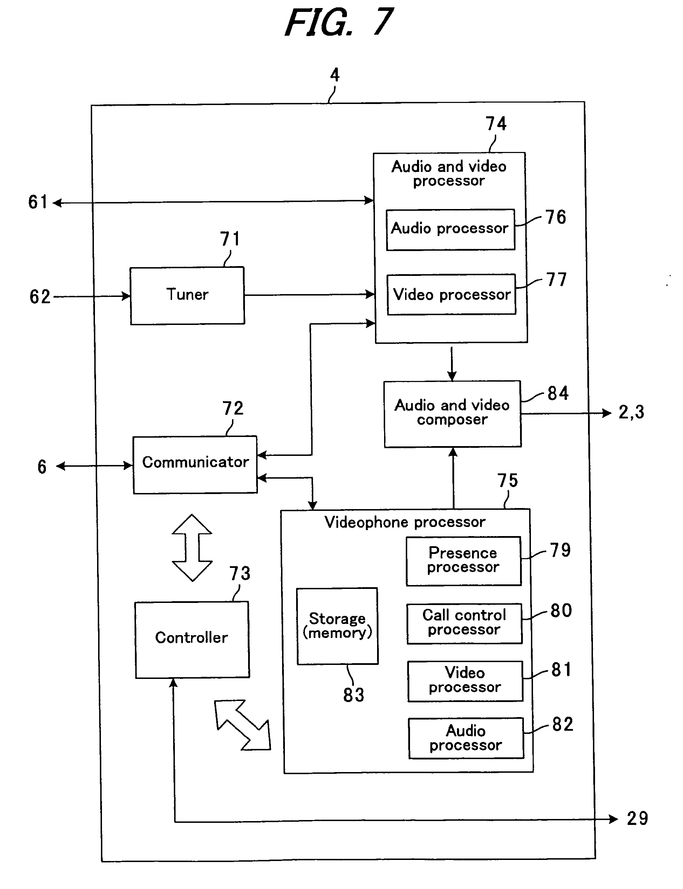

FIG. 6 is a block diagram showing a videophone system configuration. FIG. 7 is a block diagram showing a configuration of adapter unit 4 (FIG. 6). The same components as in FIGS. 1 to 5 are allotted with the same reference numerals with detailed description omitted.

Adapter unit 4 inputs image and sound information from external appliance 61 such as a video player or receives TV programs by way of an antenna 62. As shown in FIG. 7, the adapter unit is composed of a tuner 71, a communicator 72, a controller 73, an audio and video processor 74, a videophone processor 75 and an audio and video composer 84.

Tuner 71 demodulates digital multichannel broadcast signals received through antenna 62 to generate a baseband bit stream signal. The bit stream signal output from tuner 71 is input to audio and video processor 74, where a particular video information stream and audio information stream and a particular program information stream are separated from the bit stream signal having a plurality of programs (video information) and a plurality of programs information multiplexed therein. The audio information stream is decoded by an audio processor 76 and output from the speakers of television receiver 2 and/or set top unit 3. The video information stream is decoded by a video processor 77 and output to television receiver 2 through audio and video composer 84.

Video and audio information is also input from external appliance 61 and processed in the same manner as above by audio processor 76 and video processor 77. Further, video and audio information is also input via network 6 into communicator 72 and transferred to audio and video processor 74, where the video and audio information is subjected to the same process as above.

Videophone information is input from and output to network 6 via communicator 72. Upon this, videophone processor 75 handles the processing of videophone information. Videophone processor 75 is composed of a presence processor 79, a call control processor 80, a video processor 81, an audio processor 82, a storage (memory) 83. Presence processor 79 handles the task of checking the user's presence or absence in the room or in the home. Call control processor 80 implements establishment of a call. Video processor 81 and audio processor 82 handle processing of video and audio data for videophone. Storage 83 previously holds the necessary data for call control (e.g., the aforementioned response-permitted terminal information, etc.) Controller 73 governs the operations of all the components.

FIG. 8 is a sequence diagram showing session establishment of one-way communication and two-way communication between videophone terminals.

This embodiment assumes that a call is established between the caller's videophone terminal and the callee's videophone terminal using SIP. Call control processor 80 of videophone processor 75 handles this process. When a request relating to call control is made between the caller side and the callee side, the request message is notified from one end to the other, and if the other end responds this request, it sends out a response message to the opposite end. This message is one that is handled automatically by videophones.

Initially, two videophone terminals are not connected to each other. The caller side sends out a communication initiation request "INVITE" for setting up a new session to the callee side. Upon this, communicator 72 on the caller side does not need to notify the callee side of the communication port information, as already mentioned.

The callee side receives the communication initiation request and sends back a response message "RINGING" which indicates being called. Here, it is arbitrary and not always necessary to send back the response message "RINGING". The callee side checks whether the sender of the communication initiation request is an acceptable site by referring to the response-permitted terminal information previously stored memory 83. As a result of the reference, if the sender terminal is found in the response-permitted terminal information, callee's call control processor 80 notifies the caller side of the communication port number or numbers to be used (e. g. , the communication port number of audio data) together with a communication initiation authorization "OK" for acceptance of the communication request. Caller's call control processor 80 immediately sends out an "ACK" signal that indicates reception of communication initiation authorization "OK" to the callee side. In this way, one-way communication session from the caller side to the callee side is established.

If callee's memory 83 does not have the caller's terminal in the response-permitted terminal information, callee's call control processor 80 sends back a message "NG" which rejects the call setup request from the caller and does not permit establishment of the one-way communication.

There is a case in which communication from the callee to the caller is needed after the establishment of one-way communication. In this case, it is necessary to establish a two-way communication session. For this purpose, first a communication switching request "Re-INVITE" is sent from the callee side to the caller side. Receiving the communication switching request, the caller side sends back a message "RINGING" which indicates reception of the communication switching request. This "RINGING" may be omitted because it is a tentative reply message before returning "OK" or "NG". Then, after making sure that the "Re-INVITE" request is from the endpoint to which the caller has sent the communication initiation request, the caller side gives notice of a communication switch authorization "OK" to the callee side. At this point, information on the communication port numbers is preferably sent together. If the request is one that is sent from other than the endpoint to which the caller has sent the communication initiation request before, the caller sends an "NG" signal that indicates rejects switch of communication. The callee side immediately sends an "ACK" signal that indicates reception of the communication switch authorization to the caller side. In this way, two-way communication session which also enables communication from the callee side to the caller side is established.

Though, in the above case, the response message "RINGING" is sent immediately after when the communication initiation request "INVITE" has been received, but this notice can be given after a confirmation transaction. It is not necessary to send "RINGING" if unneeded, as already mentioned above.

Next, individual processes will be described in detail.

### <One-way communication>

To begin with, the procedures up to establishment of one-way communication in the sequence diagram shown in FIG. 8 will be described.

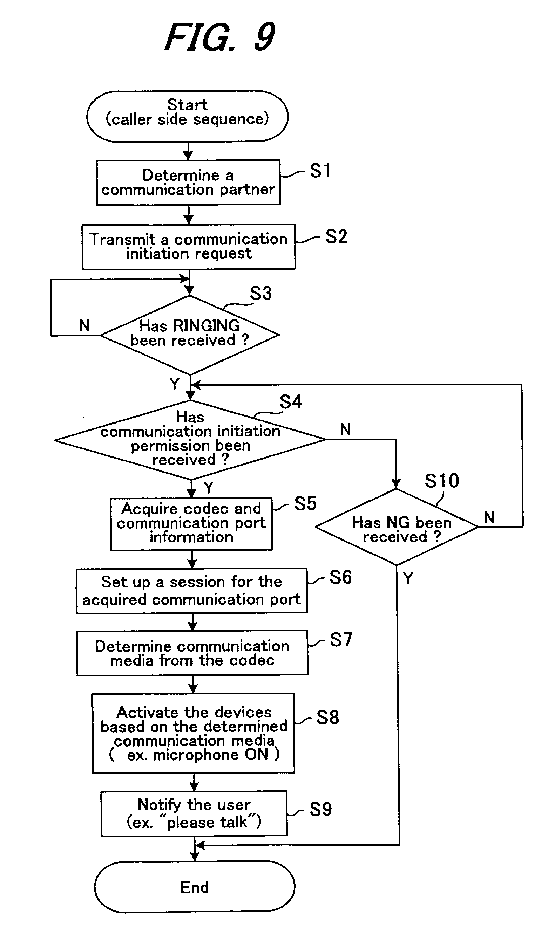

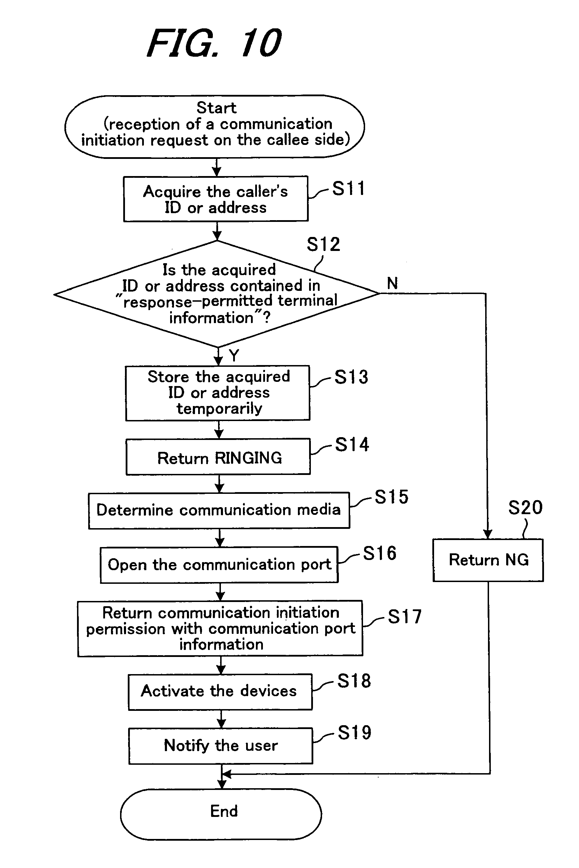

FIG. 9 is a flowchart showing a sequence of transactions on the caller's videophone terminal until establishment of a one-way communication session, and FIG. 10 is a flowchart showing a sequence of transactions on the callee' s videophone terminal until establishment of a one-way communication session.

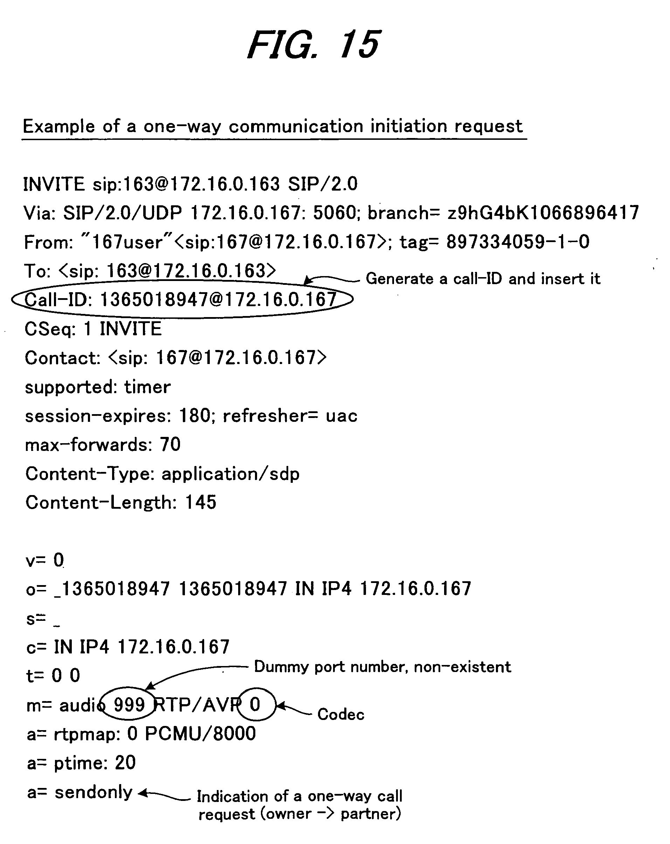

In caller's videophone terminal 1 (FIG. 6), the user selects and determines one communication partner using voice-call key 50 (FIG. 5) on remote control device 5 (Step S1: Step will be omitted herein below (FIG. 9)). IR signals emitted from remote control device 5 are input to adapter R/C photoreceptor 25 of set top unit 3 (FIG. 6) and then transferred to adapter unit 4 via connection cable 28 (FIG. 3). Videophone processor 75 (FIG. 7) of adapter unit 4 transmits a communication initiation request "INVITE" to the selected videophone at the other end via Internet 6 (S2 (FIG. 9)). FIG. 15 shows a request example of a one-way communication in this case. Because the caller side is the side that tries to call, it designates audio as the communication media type by the description "audio" and also designates one-way communication as the communication type by the description "sendonly" so as to indicate that only audio is transmitted but is not received. Since no audio is received, it is not necessary to designate a communication port for audio reception. At this point, a call ID is generated, but preferably with a non-existent communication port number. This will avoid disclosure of the true communication port information to the other end. Or, even the aforementioned non-existent communication port number may not necessary be send at all. Further, generation of the call ID makes it possible to simplify the response to the one-way communication request and the procedures for transfer to two-way communication.

Here, it goes without saying that instead of a non-existent communication port a real communication port for audio reception may be notified.

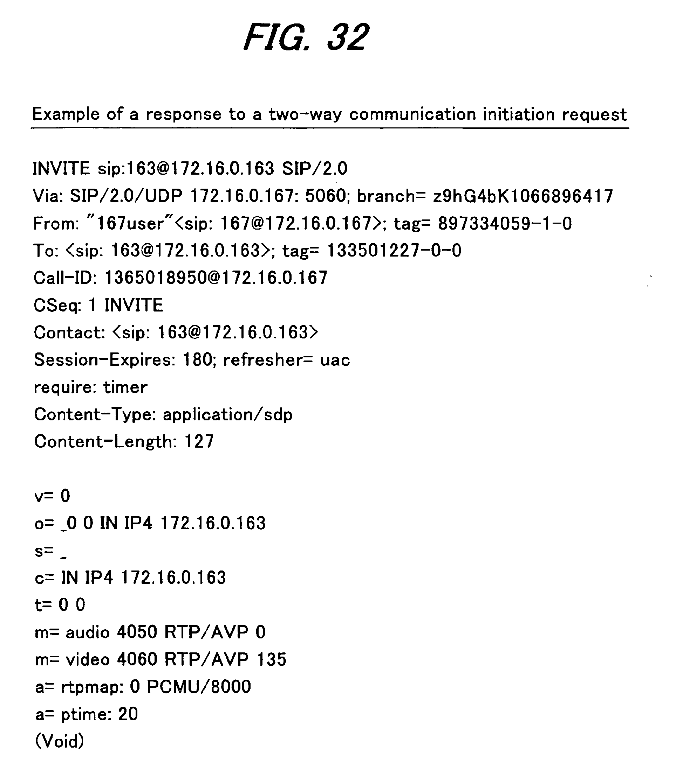

FIG. 32 shows an example of a request for initiating two-way communication. Here, the fact of a connection initiation request for a new call is indicated by generation of a new call ID. Also, following SIP procedures, blanking the information indicating the direction of communication such as "sendonly" indicates the fact that the request is a two-way communication request.

The callee' s videophone terminal 1 acquires the caller' s ID or address when receiving a communication initiation request (S11(FIG. 10)). Controller 73 of the callee's videophone terminal 1, based on the acquired ID or address, refers to the "response-permitted terminal information" previously stored in memory 83, to check whether the caller's videophone terminal as the sender site of the communication initiation request is contained therein (S12). As a result of this reference, if the sender is not found, it is determined that the sender is not one to communicate with and call control processor 80 sends an "NG" message to the caller side (S20), so that the one-way session will not be set up. If as a result of reference, the sender is found in the response-permitted terminal information, the operation goes to S13 and forwards.

FIG. 11A shows an example of response-permitted terminal information. The information is composed of a list of IDs, addresses and initial communication media types. The initial communication media types indicate the media types of which communication with the other end is permitted at the initial communication request. If the system is designed so that ID or address should be acquired, it is not necessary to register both, but registration of either one is sufficient enough. In the example of the figure, audio communication is permitted for Mr./Ms. AAA, audio and video communication for Mr./Ms. BBB, video communication for Mr./Ms. CCC, and audio communication for Mr./Ms. DDD, respectively. If a communication request including a communication media type that is not recorded (permitted) has been received, connection through that communication media which is not registered, alone, should be rejected. In some embodiments, if a communication request contains a communication media type that is not registered, the communication request itself may be rejected. Unlike the example of FIG. 11A, it is not necessary to register the types of initial communication media in correspondence with each endpoint but the initial communication media may be fixed uniquely regardless of whoever the sender is.

It is also possible to separate response-permitted terminal information into that for one-way communication and that for two-way communication as shown in FIG. 11B. With regards to each communication media type, when a one-way communication initiation request has been received, the response-permitted terminal information for one-way communication is referred to so as to check whether the sender of the one-way communication initiation request is found therein. When a two-way communication initiation request has been received, the response-permitted terminal information for two-way communication is referred to so as to check whether the sender of the two-way communication initiation request is found therein. This configuration makes it possible to discriminate between the parties from which one-way communication is received and the parties from which two-way communication is received and also with regards to communication media types.

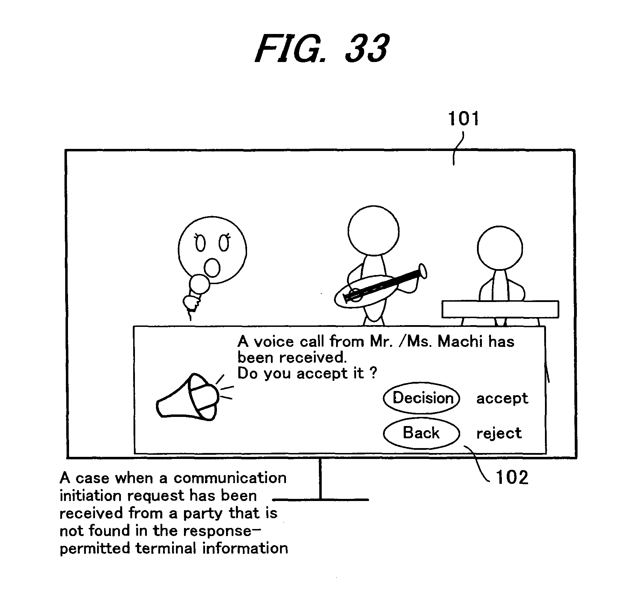

It is also possible to arrange an apparatus such that when receiving a communication initiation request from an end point that is not contained in the response-permitted terminal information, the apparatus presents the fact to the user so as to ask the user for instructions. FIG. 33 is an on-screen display example of giving notice and asking the user for a decision when a communication initiation request is received from a party who is not contained in the response-permitted terminal information. Particularly, FIG. 33 shows a display example when a one-way communication initiation request has been received. While viewing this, the user is able to grant communication by pressing the "decision" key if the user permits communication with a party who is not contained in the response-permitted terminal information and is able to reject communication by pressing the "back" key if the user does not want to permit communication.

Also, a picture of a speaker shown in this drawing indicates reception of a communication request for one-way audio communication (voice-call). In this way, use of a pictorial representation makes it possible to facilitate the user to make a quick decision on whether to grant the media and communication.

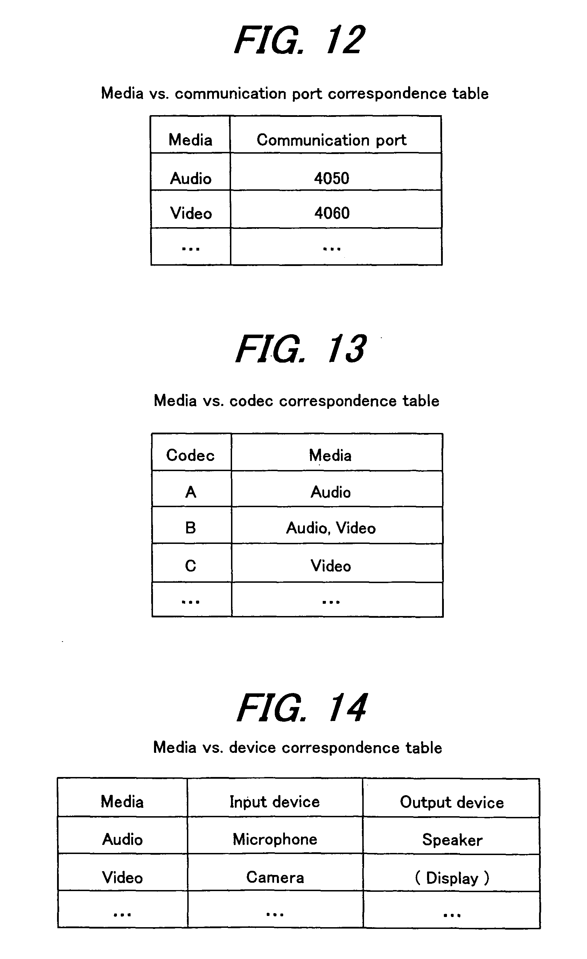

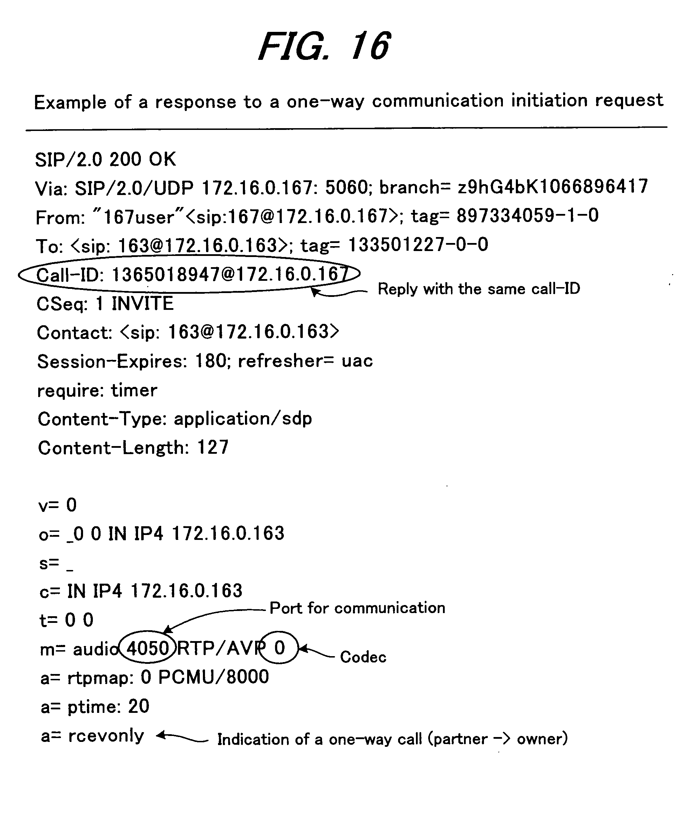

Call control processor 80 temporarily stores the acquired ID or address in memory 83 (S13 (FIG. 10)), and sends "RINGING" to the caller side (S14). Controller 73 determines the communication media in accordance with a list of permission (S15) and opens communication ports of the determined communication media in accordance with the communication port correspondence table of FIG. 12, stored in memory 83 (S16). Call control processor 80 gives the caller side notice of the "OK" message together with the information on the opened communication ports (S17). At the same time, call control processor 80 preferably gives notice of the information on the codec used for the communication media, in accordance with the codec correspondence table of FIG. 13, stored in memory 83. FIG. 16 shows an example of a response to a one-way communication request. The callee side gives notice of the same ID as the call ID that was given by the caller side. This gives the source of the response by Clearly indicating the original one-way communication request. As to the communication port number and codec information, existing numbers should be given, unlike the case of the communication request. Specifically, since the callee side is the side that is called up, it designates audio as the communication media by the description of "audio" and also designates one-way communication mode in which only audio is received but not transmitted, by the description of "recvonly". To receive audio, "4050" is given as the communication port for audio reception.

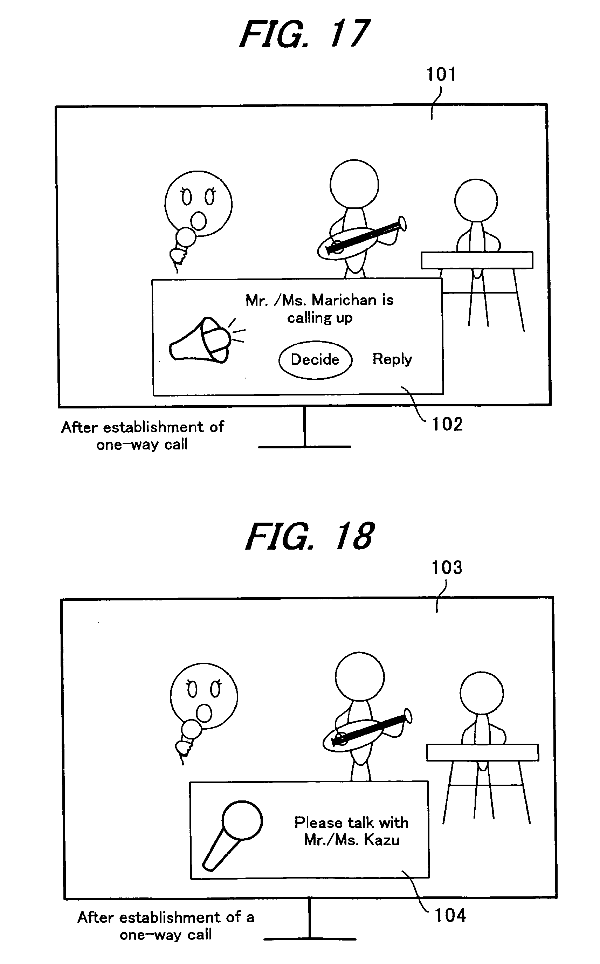

Next, controller 73 activates the output devices corresponding to the communication media to be used in accordance with the device correspondence table of FIG. 14, stored in memory 83 (S18 (FIG. 10)). At the next step, the controller notifies the user of reception of a call (S19). For example, providing that the caller is Mr./Ms. Marichan and the callee is Mr. /Ms. Kazu, an image 102 that shows Mr. /Ms. Marichan calling up is displayed on display 11 of television receiver 2 as shown in FIG. 17. This display is given such that image 102 that is sent from video processor 81 to audio and video composer 84 is superimposed on an image 101 of the broadcast program that is generated by video processor 77. Controller 30 makes control of audio and video composer 84 to output sound presentation produced by audio processor 82 from speaker 24 of set top unit 3 and also activates incoming call lamp 29 of set top unit 3.

Call control processor 80 of caller' s videophone terminal waits for arrival of "RINGING" (S3) as shown in FIG. 9. After its arrival, the processor 80 checks whether it has received "OK" (S4). When "NG" instead of "OK" is detected (S10), the one-way communication session does not hold and ends at this point.

As the caller side receives the communication port information and codec information together with "OK" message (S5), it sets up a session for the acquired communication port (S6). Then controller 73 determines the communication media based on the received communication port information and codec information, referring to the communication port correspondence table and codec correspondence table. Further, the controller determines the input devices from the determined communication media, referring to the device correspondence table and activates the devices, and notifies the user of establishment of communication. For example, video processor 81 generates an image 104 including a caption "Please talk with Mr./Ms. Kazuchan", and audio and video composer 84 superimposes the image 104 over a program image 103 generated by video processor 77, to thereby give a notice on display 11 of television receiver 2, as shown in FIG. 18 (S9).

### <Two-way communication>

Next, a switching process from one-way communication that has been established by the sequence shown in FIG. 8 to two-way communication will be described.

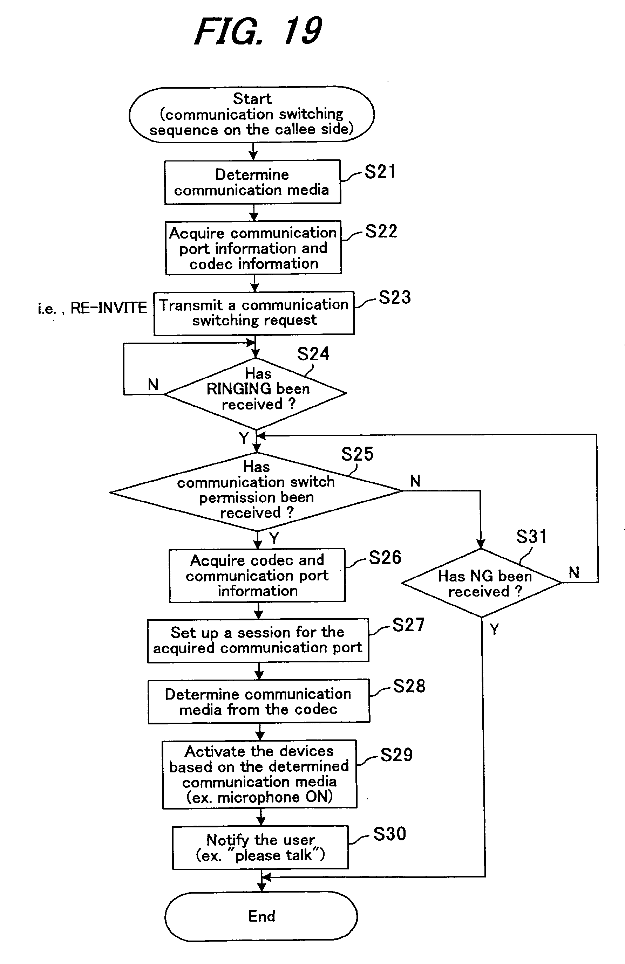

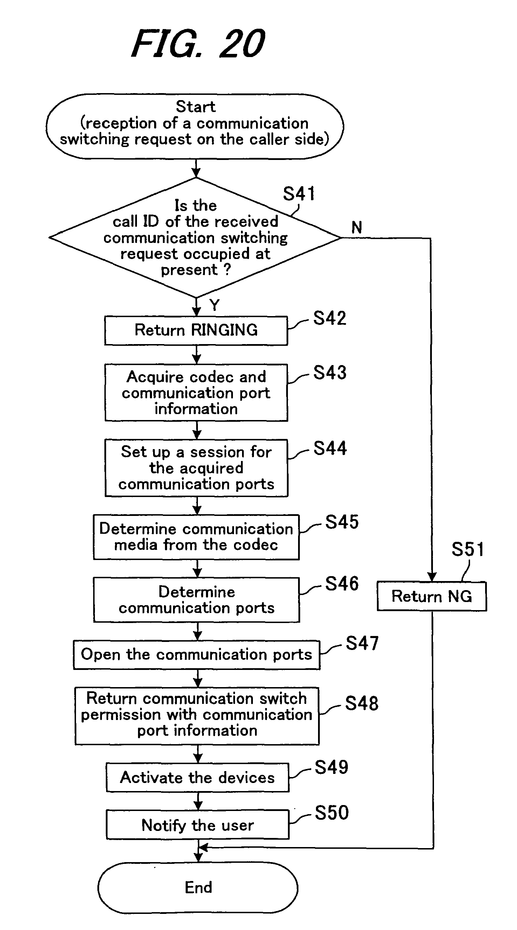

FIG. 19 is a flowchart showing a sequence of transactions on the callee's videophone terminal until establishment of a two-way communication session, and FIG. 20 is a flowchart showing a sequence of transactions on the caller's videophone terminal until establishment of a two-way communication session.

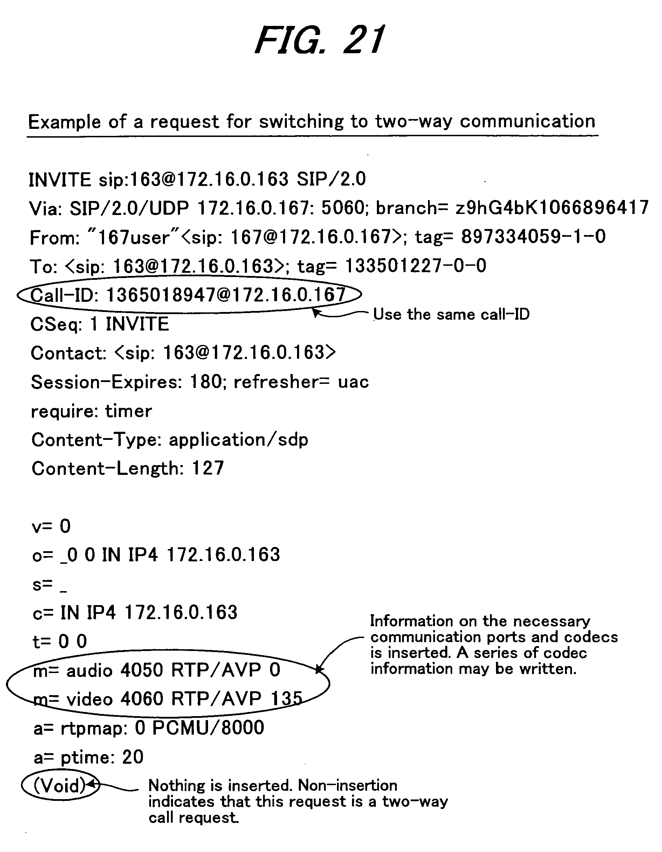

To begin with, on the callee side, communication media is determined based on user instructions (S21). Generally, the user instructions are preferably given using remote control device 5. Controller 73 acquires the communication port information and codec information corresponding to the determined communication media, referring to the communication port correspondence table and codec correspondence table stored in memory 83. Controller 73 causes call control processor 80 to transmits a communication switching request "RE-INVITE" to the caller side (S23). FIG. 21 shows a request example of this process for switching to two-way communication.

The same call ID as before is used. Use of the unchanged call ID indicates explicit intention for switching the one-way call being established into two-way mode. The necessary communication port information and codec information are notified. A plurality of codec information may be included. The end of the sequence may be given with a void so as to indicate a request for a two-way call (nothing may be written for a request for two-way communication). This is a result of following the general format rule for a call connection request in SIP, "nothing may be written for a request for two-way communication". However, this does not mean that nothing should be written. Specifically, in FIG. 21 the communication media are designated as audio by the description "audio" and as video (images) by the description "video". Since both reception and transmission handle audio and video (images), there is neither a tag "sendonly" for only transmission purposes nor a tag "recvonly" for only reception purposes, to thereby designate two-way communication. Ports "4050" and "4060" are designated as audio and video (images) receiving ports, respectively. The audio receiving port "4050" in this case is identical with the communication port number for the audio receiving port "4050" which has been used at the time of response to the one-way communication request described with FIG. 16. Use of the same communication port makes it possible to receive the audio for voice-call and the audio for videophone at the same communication port. However, the communication port number for audio reception, to be designated upon switching to two-way communication, is not necessarily identical with the one used for one-way communication. Use of a different communication port enables easy switching between the audio codec during one-way communication and the audio codec during two-way communication, for example.

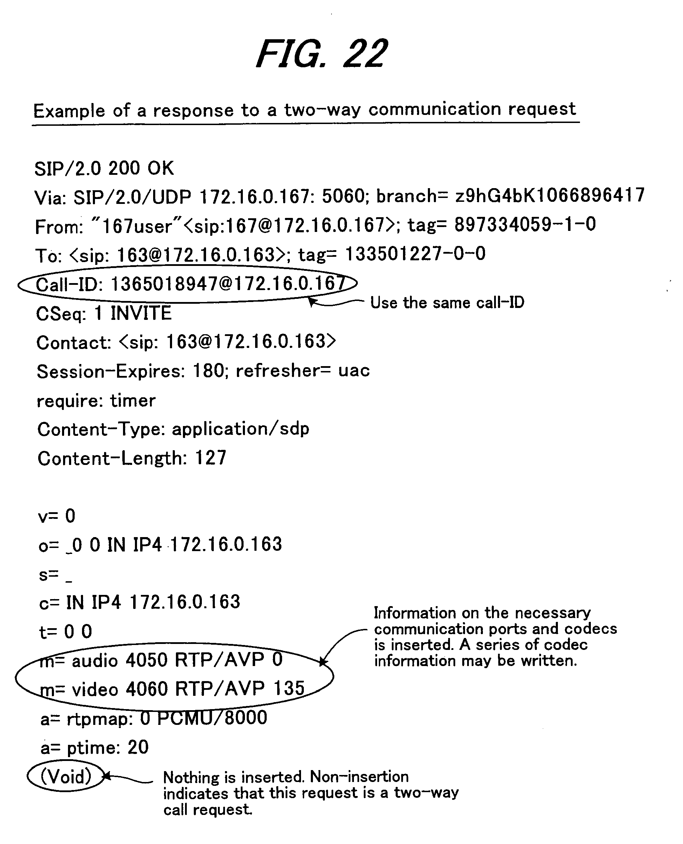

When having received the communication switching request "RE-INVITE", the caller side checks whether the communication switching request is one for the call that is being established. Specifically, call control processor 80 examines whether the received call ID that is designated in RE-INVITE is identical with the call ID which is being used at present (S41 (FIG. 20)). If the request is a request for switching the one-way communication being established into two-way communication, the call ID designated in RE-INVITE must be occupied. If it is being used, call control processor 80 returns a response message "RINGING" (S42). If the system is designed so as not to return "RINGING", the operation goes to S52. FIG. 22 shows an example of a response to the switching request for two-way communication in this case. As described before, it is preferable that the same call ID is used. The necessary communication port information and codec information are notified. A plurality of codec information may be included. The end of the sequence may be given with a void so as to indicate a request for a two-way call (nothing may be written for a request for two-way communication as already mentioned). Specifically, in FIG. 22 the communication media are designated as audio by the description "audio" and as video (images) by the description "video". Since both reception and transmission handle audio and video (images), there is neither a tag "sendonly" for only transmission purposes nor a tag "recvonly" for only reception purposes, to thereby designate two-way communication. Ports "4050" and "4060" are designated as audio and video (images) receiving ports, respectively.

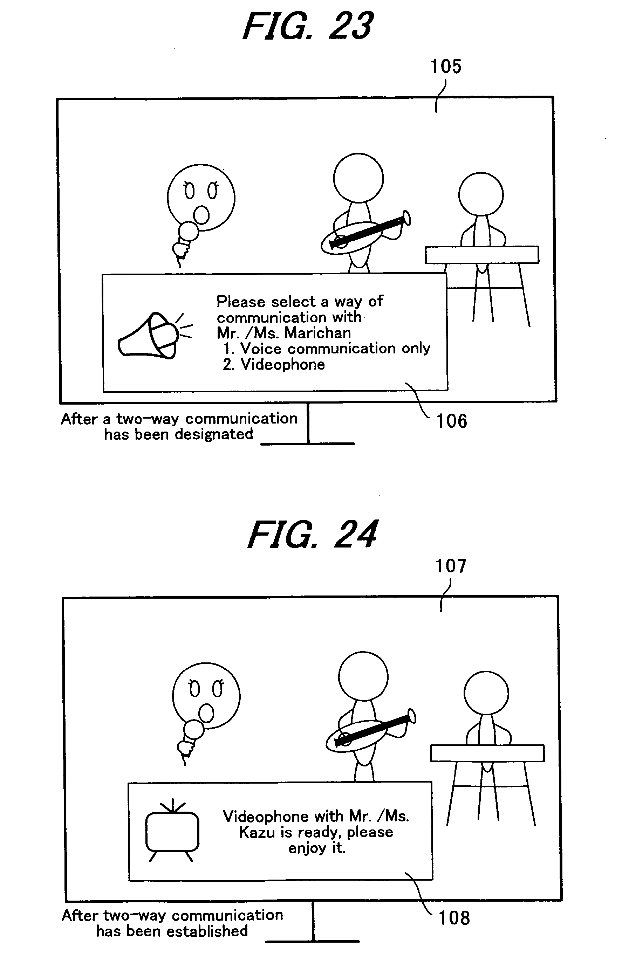

The caller side acquires the codec information and communication port information sent from the callee side (S43), and call control processor 80 sets up a session for the acquired communication ports (S44). Controller 73 on the caller side determines the communication media based on the received codec information, referring to the codec correspondence table stored inmemory 83 (S45) and also determines the communication ports referring to communication port table (S46). Then, the communication ports are opened (S47), and call control processor 80 returns "OK" together with the caller's communication port information, to the callee side (S48). For example, as shown in FIG. 23, video processor 81 transmits a display for inquiring of the user about communication media ("1. Voice communication only" and "2. Videophone") to audio and video composer 84, which in turn superimposes an image 106 over a broadcast program image 105 generated by video processor 77. Controller 73 activates the devices corresponding to the communication media selected by the user (S49 (FIG. 20)). For example, when "1. Voice communication only" is selected, the microphone and speakers are activated as input and output devices, respectively. When "2. Videophone" is selected, the camera as an input device for video and the display as an output device are activated in addition to the aforementioned devices. As to the display, if it has been activated already before establishment of this two-way communication call, it is not necessary to restart it.

It is possible to configure the system so that, when a communication initiation request has been received during reception of a broadcast program, the callee side permits only one-way communication regardless of whether the communication initiation request is either one for one-way communication or one for two-way communication. Even if the sender of this communication initiation request is not found in the aforementioned one-way response-permitted terminal information storage but is found in the two-way response-permitted terminal information storage only, it is possible to permit one-way communication only. This configuration makes it possible for the user to enjoy the program without a favorite program being interrupted. When a two-way communication initiation request from a sender is changed by the callee side and one-way communication which is unexpected by the sender is returned, it is preferred if a message "two-way mode has been switched to one-way mode" is presented in the terminal of the sender of the communication initiation request. Because one-way communication is thus permitted, it is possible for the callee to make a quick response if, for example, a caller with a call of more importance than watching a program made a call while watching a preferable program.

Further, if a "favorite program" is one that is broadcast every week or the like, it is possible to register the broadcasting day of the month or week and the broadcasting slot of the program beforehand, and the apparatus is adapted to activate an operating mode that receives an incoming call as a one-way communication whatever communication initiation request the call makes, every time the broadcast of the favorite program starts. Alternatively, favorite genres of broadcast programs have been registered beforehand, and the apparatus may be adapted to refer to EPG (Electric Program Guide) when a communication initiation request has been received during the watching of a program and activate the operating mode that receives the incoming call as a one-way communication if the program turns out to belong to one of the favorite program genres. It goes without saying that the operating condition of this functionality is not limited to the favorite program genres, but programs of favorite actors and actress, singers, writers, directors, personalities etc may be possible.

Controller 73 notifies the user of the establishment of two-way communication (S50 (FIG. 20)). For example, as shown in FIG. 23, providing that the caller is Mr. /Ms. Marichan and the callee is Mr./Ms. Kazu, an image 106 that shows the establishment of two-way communication with Mr. /Ms. Marichan is displayed on display 11 of television receiver 2, the sound presentation generated by audio processor 82 is output from speaker 24 of set top unit 3 by way of audio and video composer 84, and also incoming call lamp 29 is turned on by an incoming call lamp activation controller 85.

At S41 (FIG. 20), if the call ID is not occupied, call control processor 80 returns "NG" and ends the sequence.

As the callee side receives "RINGING" (S24 (FIG. 19)) and subsequently "OK" (S25), it also acquires the codec information and communication port information (S26). In the case where no "RINGING" is sent from the caller side, the callee side, skipping S24, may receive "OK" (S25), then acquire the codec information and communication port information (S26). Then, call control processor 80 sets up a session for the acquired communication ports (S27). Controller 73 determines the communication media based on the codec information, referring to the codec table stored in memory 83 (S28). Further, the controller activates the corresponding devices selected based on the determined media, referring to the device table stored in memory 83. Then the establishment of two-way communication is notified to the user (S30). For example, as shown in FIG. 24, video processor 81 generates an image 108 including a caption "Videophone with Mr./Ms. Kazuchan is ready, please enjoy it" etc., and audio and video composer 84 superimposes and displays the image 108 over a program image 107 generated by video processor 77, in television receiver 2.

If "NG" received (S31) instead of receiving "OK" at S25 (FIG. 19), the two-way communication session could not be set up, and the sequence ends at this point.

### <Another embodiment of two-way communication >

The description up to this point was described taking an example of switching a call from one-way communication to two-way communication by modifying the properties of the call. However, use of the identical call is not a must, but two separate calls for one-way communication and two-way communication may be used. That is, it is possible to provide a configuration such that, upon switching from one-way communication to two-way communication, the callee side may make a request for a new call connection for two-way communication handling both transmission and reception of audio and transmission and reception of video and may cut off the existing one-way communication call after establishment of the new call for two-way communication. Alternatively, upon switching from one-way communication to two-way communication, the callee side may make a request for an additional call connection for transmission of audio and transmission and reception of video, and after establishment of the additional call the callee side may use the two calls, the one-way communication call and the additional call, to achieve transmission and reception of audio and video.

The main point is that, achievement of smooth switching without breaks of voice and sound on the callee side, can be made upon switching from one-way communication to two-way communication, and the difference between the methods of execution is within the scope of the present invention. Here, for either the case of setting up a new call for two-way communication or the case of setting up an additional call, it is preferred that the sequence of making a request for a call connection includes the call ID for one-way communication so that the newly setup call can be made correspondent to the call for one-way communication.

### <Communication switching process>

The above case described a switch of communication mode from one-way to two-way. Next, a process where the videophones which have established a two-way session change communication media types. In this case, switching can be made by either the caller side or the callee side.

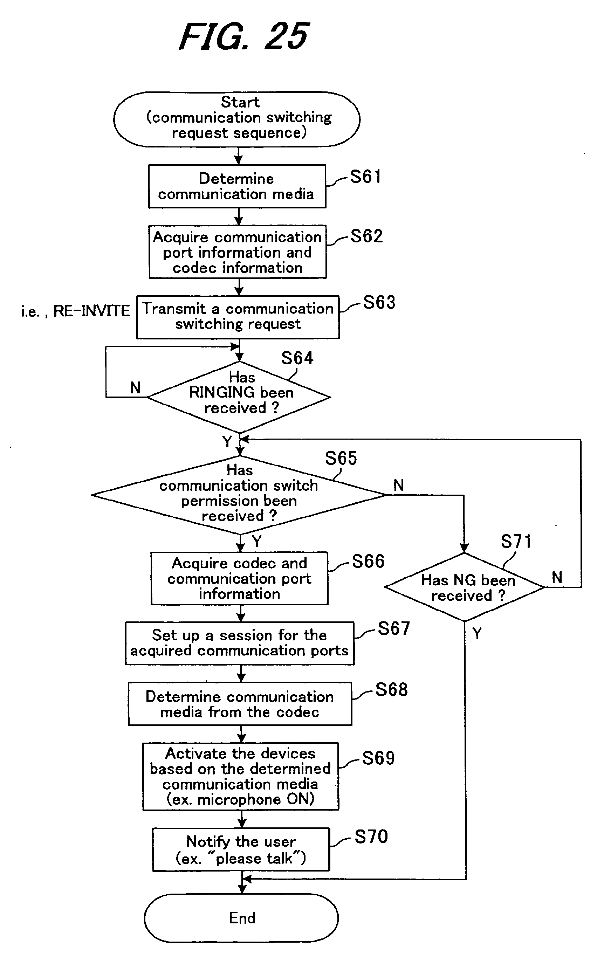

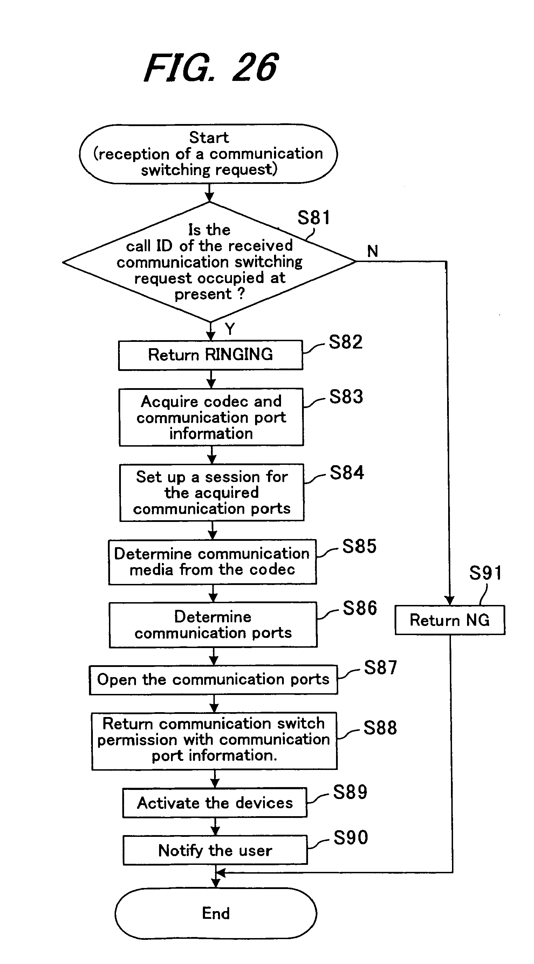

FIG. 25 is a flowchart showing the process on the side which sends out a communication switching request, and FIG. 26 is a flowchart showing the process on the side which receives a communication switching request.

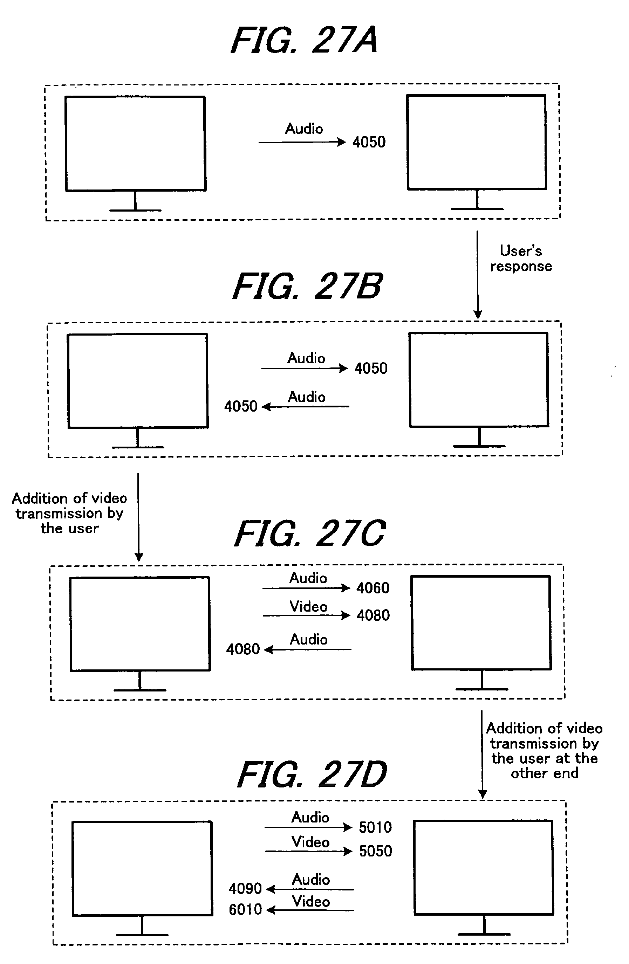

Since the procedures in FIGS. 25 and 26 are similar to those in FIGS. 19 and 20, the detailed description is omitted. With these procedures, regardless of the caller's or callee' s videophone terminal, communication media can be exchanged by not only audio but also video, as shown in FIG. 27. Further, it is also possible to make a change from audio to video or from video to audio. The relationship between communication media and communication ports is as shown in FIG. 12. Specifically, the communication port for audio media is 4050 and the communication port for video media is 4060.

A more detail will be given with reference to FIG. 27. First, as shown in FIG. 27A, the first videophone terminal (assume the left apparatus in FIG. 27) makes a communication initiation request for one-way communication to the second videophone terminal (assume the right apparatus) and sets up a one-way communication call. At this point, only audio data is transmitted from the first videophone terminal to the second videophone terminal.

After establishment of one-way communication, triggered by user's picking up of a receiver, pressing a response button or any other action, a communication switching request for two-way communication is transmitted from the second videophone terminal to the first videophone terminal, and two-way communication can be set up as shown in FIG. 27B. At this point, in this two-way communication only audio data is transmitted and received from each other. This arrangement enables the user of the first videophone terminal to make conversation while having time to tidy up him/herself.

Thereafter, as shown in FIG. 27C, as the user of the first videophone terminal gives permission for transmission of video data, a message for staring video data transmission is notified from the first videophone terminal to the second videophone terminal and also communication of video data is started. In this case, the user of the first videophone terminal may input the command for permitting video data transmission by means of a remote control device, for example. The feature that video data will not be transmitted until a permission is given makes it possible for the user of the first videophone terminal to select either to make or not to make transmission of video data, at will.

When the user of the second videophone terminal gives permission of transmitting video data, a message for starting video data transmission is notified from the second videophone terminal to the first videophone terminal. As a result, two-way communication of video data is established between the first videophone terminal and the second videophone terminal. Since no video data will be transmitted without permission of the user of the second videophone terminal, this makes it possible for the user of the second videophone terminal to have sufficient time to make the mental preparation.

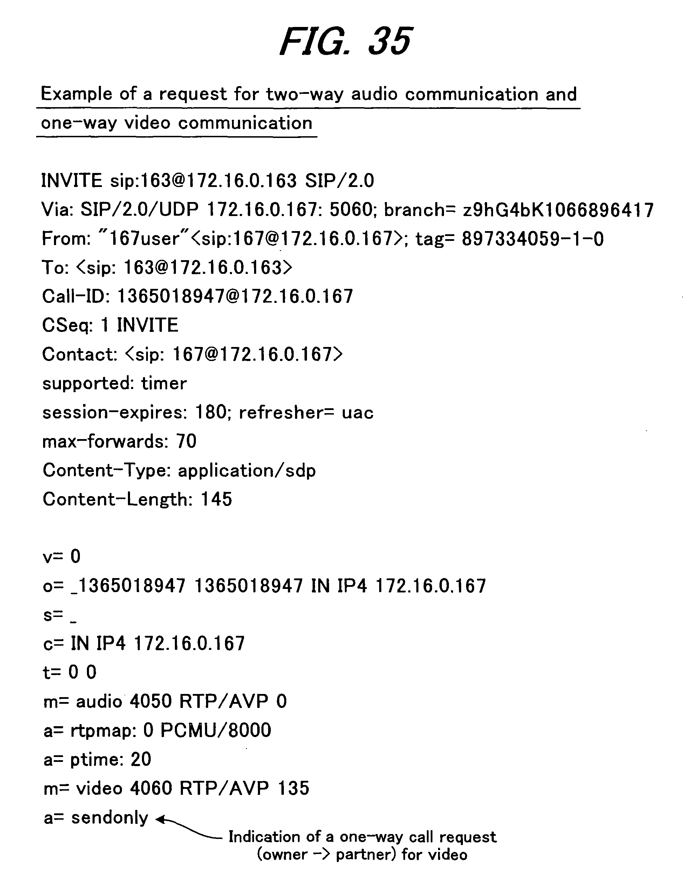

FIG. 35 shows an example of a communication request when a sender makes a request for two-way audio communication and one-way video communication from the sender's terminal to the receiver. For example, when the operation switches from that of FIG. 27B to that of FIG. 27C, a communication request shown in FIG. 35 is transmitted from the left apparatus to the right one. Designation "a=sendonly" is given to video data only.

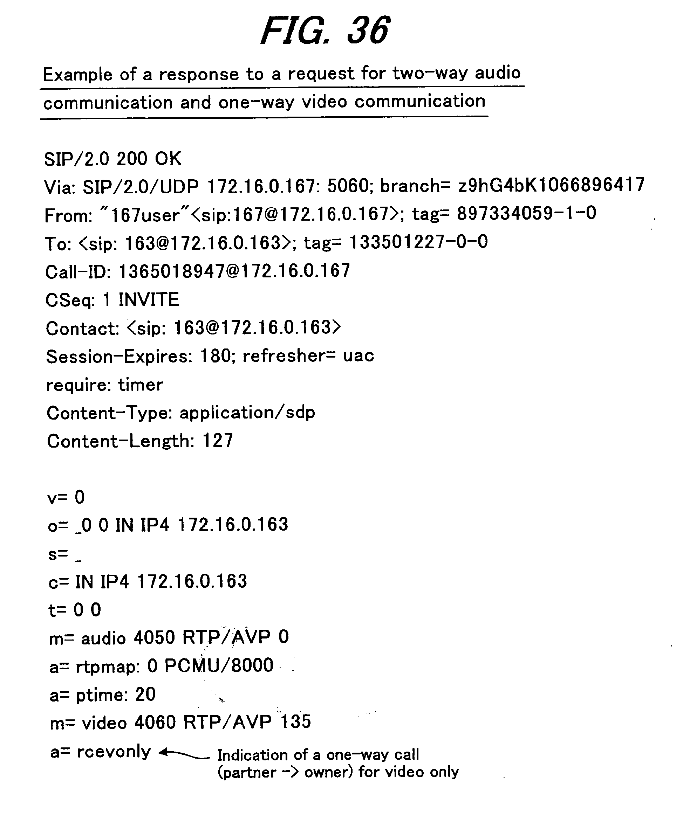

FIG. 36 shows an example where the receiver receives the communication request shown in FIG. 35 and returns a response to the communication request's sender when the receiver accepts this request. Designation "a=rcvonly" is given to video data only.

Exchange of the communication request shown in FIG. 35 and the response shown in FIG. 36 between the two terminals establishes a call of two-way audio and one-way video communication.

In this way, it is possible to increase types of communication data, one by one, in accordance with permission of the users. As a result, the users are able to select optimal communication mode of their own in a given condition during communication. In the example shown in FIG. 27, the callee side of one-way communication gives directions to switch from one-way communication to two-way communication, but the direction may be given by the caller side, on a case by case basis. Further, video data communication is started first by the caller side of one-way communication, but the reverse may be possible.

When the communication switching request to be transmitted at the communication alternation at S63 in FIG. 25 as well as the communication switching request to be received at the communication alternation at S81 in FIG. 26 is a signal for requesting one-way communication as explained with FIG. 15, it is possible to change the call into one-way call mode even after two-way call has been already established. Alternatively, if the currently set up call is a one-way call, the one-way call may be switched to another one-way call. With these features, it is possible to select a suitable communication mode flexibly, depending on the time and circumstances. Of course, it goes without saying that to deal with the user not wanting to change the communication mode, a rejecting means or avoiding means may be provided.

In starting communication (initiating a session) with another communication terminal, if a user who wants to start a communication with someone is able to simply try to call another user, it is possible to start communication in a very lighthearted manner as for example, "let's try to call first". This can be done by this one-way communication. At present, phone calls using IP (Internet Protocol) phone now becoming widespread under a well-conditioned communication environment and are free of charge in most cases when used with the necessary conditions satisfied. In such an environment under which one doesn't need to mind the charge of phone calls, it is no longer necessary to wait for the other end to answer a call. In other words, there is no longer necessary to "save the fee of phone calls", which used to be the merit obtained as a result of the feature "no communication will start as along as the other end does not respond". With this background, the communication style "let's try to call and connect" is useful and effective for the users.

### <Communication break and restart process>

As another mode of embodiment, there is a configuration having a traffic reduction mode, which aims at reducing communication cost when communication is made sporadically. In this mode, connection is interrupted particularly when communication is not needed, e.g., in a state where no one has talked for a long period, and connection is restarted when some talk is detected, to thereby cut down waste communication traffic and communication cost. It should be noted that this mode can be set up at the user's preference.

Now, break and connection process in this mode will be described.

To begin with, the case where a one-way call has been established will be described with reference to FIG. 8. When no audio input has been detected longer than a fixed period (3 minutes or longer in this embodiment) through the microphone 22 (FIG. 3) on the "caller side" or the left side in FIG. 8, call control processor 80 (FIG. 7) records the address of the partner of the call having been established, or the callee's address and the entity of one-way communication, and cuts off the communication. Thereafter, when an audio input is detected, a one-way call is set up once again toward the recorded partner's address by the procedures of one-way call connection shown in FIG. 8. Here, if the call ID is also recorded together with the callee's address, it is possible to restart a one-way call more efficiently by reusing the call ID that has been recorded. If this one-way call had been established for both audio and video, the video image that was displayed last on the callee side at the time of communication break, may be continuously displayed as it is.

Referring once again to FIG. 8, the case where a two-way call has been established will be described. When no audio input has been detected longer than a fixed period from microphone 22 (FIG. 3), audio processor 76 (FIG. 7) and audio processor 82 (FIG. 7) on either the caller's terminal or the callee's terminal, call control processor 80 (FIG. 7) records the address of the partner of the call having been established and the entity of two-way communication, and cuts off the communication. Thereafter, when an audio input is detected within a predetermined period (within 3 minutes in the present embodiment) after the cutoff, a two-way call is set up once again toward the recorded partner' s address by the procedures of two-way call connection.

Here, if the call ID is also recorded together with the partner's address, it is possible to restart a call more efficiently by reusing the call ID that has been recorded. If this call had been established for video, the terminal that had received video may continuously display the video image that was displayed right before communication break, as it is.

Next, when an audio input is detected in a predetermined period (from 3 minutes to less than 20 minutes after cutoff, in the present embodiment) after the cutoff, a one-way call is set up toward the recorded partner's address by the procedures of one-way call connection. This automatic connection will not be performed if a fixed period (longer than 20 minutes after cutoff in the present embodiment) elapses from the cutoff.

In a case where both video and audio connections had been established, video connection may be established only after audio connection has been set up by a connection restart process, so that connection is restarted step by step.

In this way, it is possible to reduce communication traffic while considering the user's privacy by separately handling automatic re-connection stepwise in accordance with the lapse of time from cutoff.

Alternatively, if, when two-way communication is tried to be re-established after cutoff, an audio input is detected only on one of the caller side and the callee side, a one-way communication from the terminal at which audio input is detected is tried to be re-established first. Then the one-way communication may be switched into two-way communication when the receiver's terminal of the one-way communication detects an audio input.

The fact of the communication being interrupted, the fact of the communication being restarted, as above may be notified to the users. The users are able to grasp the status of communication more exactly if these notices are given. Further, when the lapse of time during which no audio has been detected comes closer to the predetermined period for cutting off the current communication, the remaining time may be presented by an alert such as "3 minutes before cutoff if you remain silent".

Conversely, if no notice is given, it is possible to effect cutoff and restart procedures in order to gain the optimal communication traffic while the users don't need to have awareness of it.

Up to this point, cutoff of communication is determined based on the presence or absence of an audio input, it however goes without saying that cutoff may be done by user's instructions.

### <Relationship with presentation of non-communication media and presentation examples when a call is established>

Suppose that before starting a call with a party at the other end, the user has been presented with, or has enjoyed, non-communication media such as a TV broadcast program, radio broadcast program, recorded video or other content. Here, description will be made of how communication media with its notice and non-communication media are presented when communication media such as a voice-call etc., is received while non-communication media is being presented.

The videophone terminal 1 on the side receiving a voice-call or the callee side, permits establishment of a one-way call without user's instructions if a call setup request is from a party that is on the response-permitted terminal list. Therefore, the terminal needs to notify the user of the establishment of the one-way call and the status that voice can be listened to from the other end of the call. As shown in the above flowcharts, there are several patterns of presenting the fact of communication having been established. Now, the examples will be explained in detail.

### (1) Visual notice examples

An example in which a voice-call notice in an image form is given in the frame of display 11 of the callee's television receiver 2 will be described.

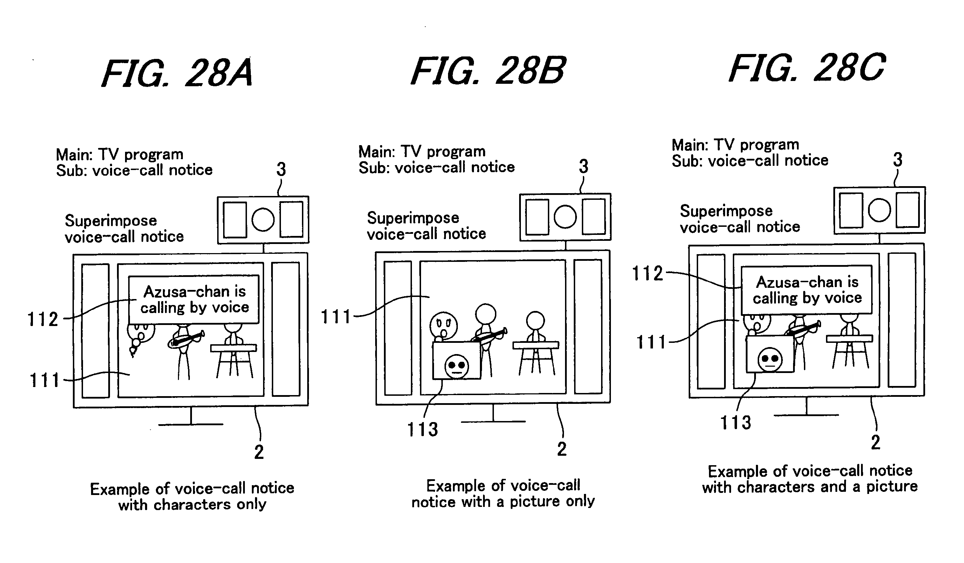

FIGS. 28A to 28C are illustrative views showing a case where a voice-call notice is superimposed over the program image. That is, the TV program is mainly displayed with a voice-call notice as an auxiliary display. FIG. 28A shows a case where a voice-call notice 112 "Azusa-chan is calling by voice" is displayed by characters alone and this is superimposed over program image 111. FIG. 28B shows a case where a voice-call notice 113 of a picture or photo representing the user calling is displayed and this is superimposed over program image 111. This is the case in which program image 111 has a least hidden area. In FIG. 28C, both character-only voice-call notice 112 and pictorial voice-call notice 113 are superimposed over program image 111. This notice is most recognizable to the user because the notice area is large, though program image 111 has a largest hidden area.

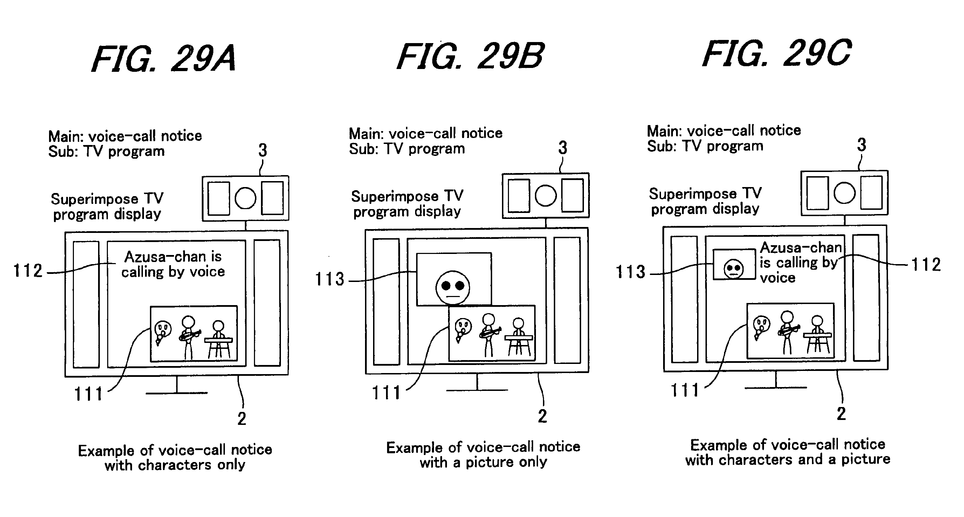

FIGS. 29A to 29C are illustrative views showing the program image superimposed over a voice-call notice. That is, a voice-call notice is mainly displayed with the TV program image as an auxiliary display. In each display example, a reduced window of the program image is displayed in parallel with the display window of the notice. FIG. 29A shows a case where a voice-call notice 112 "Azusa-chan is calling by voice " is displayed by characters alone, and program image 111 is superimposed over this. FIG. 29B shows a case where a voice-call notice 113 of a picture or photo representing the caller user is displayed and the program image 111 is superimposed over this. In FIG. 29C, program image 111 is superimposed over both character-only voice-call notice 112 and pictorial voice-call notice 113. Since in FIGS. 29A to 29C, the windows are displayed in parallel there is no hidden area though the program image is downsized and hard to see.

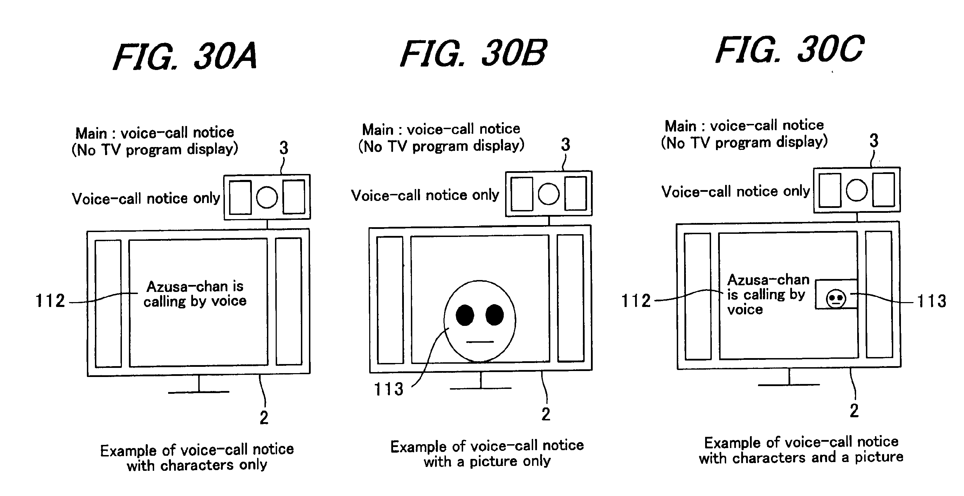

FIGS. 30A to 30C are illustrative views showing cases where only a voice-call notice is displayed. Accordingly, no TV program image is displayed, so this configuration is the most effective way to give a voice-call notice to the user. FIG. 30A shows a case where a voice-call notice 112 "Azusa-chan is calling by voice " is displayed by characters alone. FIG. 30B shows a case where a voice-call notice 113 of a picture or photo representing the user calling is displayed. In FIG. 30C, both character-only voice-call notice 112 and pictorial voice-call notice 113 are displayed.

### (2) Auditory notice examples

Next, description will be made taking examples where a voice-call notice on the callee side with voice is given using speaker 24 of set top unit 3 and speakers 12 of television receiver 2.

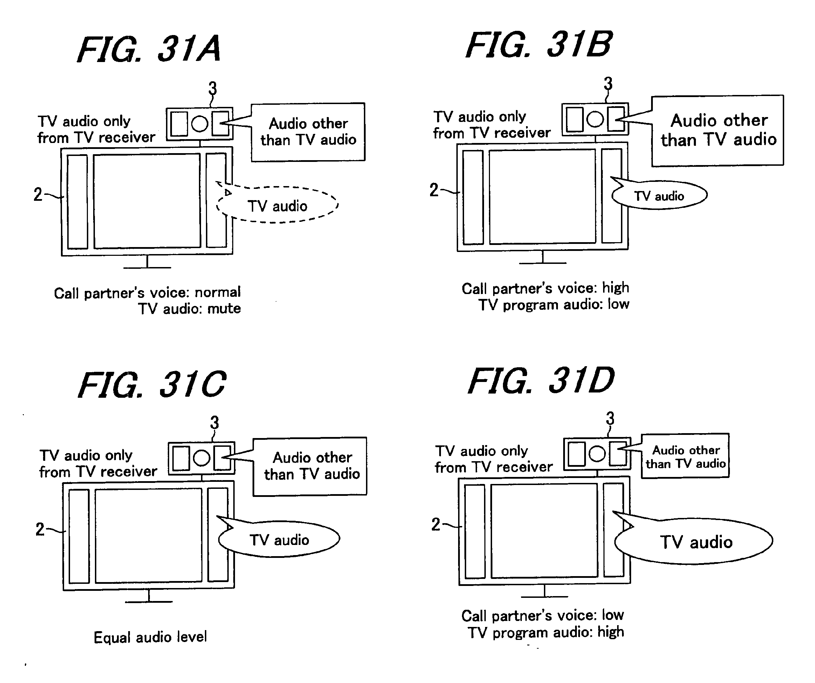

FIGS. 31A to 31D are illustrative views showing cases where a voice-call notice is given by various sound levels. FIGS. 31A to 31D show examples in which speaker 24 of set top unit 3 outputs sound 114 other than a TV program, or the videophone's audio of voice-call notice while speakers 12 of television receiver 2 outputs TV program sound 115. However, the embodiment is not limited to this. Each speaker may output opposite sound, or either one of the speakers may output both sounds.

The above controls are all made by controller 73 (FIG. 7). That is, when a voice-call notice is given after establishment of a call, the controller instructs audio and video composer 84 to make volume control. In FIG. 31A, voice-call notice 114 is output at normal sound level while TV program sound 115 is muted. In FIG. 31B, voice-call notice 114 is output at a high sound level while the TV program sound is output at a low sound level. In FIG. 31C, voice-call notice 114 is output at a sound level equivalent to that of the TV program sound. In FIG. 31D, voice-call notice 114 is output at a low sound level while the TV program sound is output at a high sound level.

As an alternative configuration, when a one-way communication call has been established, an alert sound such as "ding-dong" for calling may be output from speaker 24 of set top unit 3 and speakers 12 of television receiver 2 on the callee side. Similarly, the same alert sound "ding-dong" for calling may also be output from speaker 24 of set top unit 3 and speakers 12 of television receiver 2 on the caller side.

### <Variational examples>

The above-described modes of embodiment were explained taking examples in which a single apparatus performs both one-way communication and two-way communication, but separate device may be used for one-way communication and two-way communication. An example case is that one-way communication is implemented by set top unit 3 and after switch to two-way communication, television receiver 2 performs two-way communication. This configuration causes the user to have almost the same feeling as using the mode of embodiment described in the above auditory notice example.

In this way, switching the devices to output audio and images between the one-way communication mode and the two-way communication mode facilitates the user to recognize either the one-way communication mode or the two-way communication mode in an instant by just telling which device outputs the audio and/or video. This same effect can also be obtained without separating the devices depending on either one-way communication or two-way communication.

All the modes of embodiment disclosed herein are mere examples and should not be understood to limit the scope of the invention. The scope of the present invention is defined by the appended claims rather than by the preceding description, and equivalence of the scope of the claims and all changes within the scope of the claims are therefore intended to be embraced by the claims.

## Claims

1. A communications apparatus for establishing a communication with another apparatus, wherein both sides are able to transmit and receive a plurality of communication media at least including communication video data and communication audio data, comprising:
a communication request receiver for receiving a communication request;
a response-permitted apparatus information storage for storing information as to each apparatus whose communication request is permitted; and
a communication controller which, when receiving a communication request, determines whether a communication as to the communication request is authorized and gives permission for the communication when information as to a sender apparatus that has sent the communication request has been registered in the response-permitted apparatus information storage.

2. The communications apparatus according to Claim 1,
wherein the response-permitted apparatus information storage stores each apparatus whose communication request is permitted, in association with a communication mode including, at least, one of transmission, reception, and transmission and reception modes; and
wherein the communication controller, when receiving a communication request including information of requesting the communication mode, gives permission for communication with the sender apparatus that has sent the communication request, in the requested communication mode when in the response-permitted apparatus information storage the sender apparatus is associated with the communication mode requested by the communication request.

3. The communications apparatus according to Claim 1,
wherein the response-permitted apparatus information storage stores each apparatus whose communication request is permitted, in association with communication media that is permitted to communicate therebetween; and
wherein the communication controller, when receiving a communication request including information of requesting communication by the communication media, gives permission for communication with the sender apparatus that has sent the communication request, by the requested communication media when in the response-permitted apparatus information storage the sender apparatus is associated with the communication media requested by the communication request.

4. The communications apparatus according to Claim 1,
wherein the response-permitted apparatus information storage stores each apparatus whose communication request is permitted, in association with a communication mode including, at least, one of transmission, reception, and transmission and reception modes and communication media that is permitted to communicate therebetween; and
wherein the communication controller, when receiving a communication request including information of requesting any of the communication mode and information of requesting communication by the communication media, gives permission for communication with the sender apparatus that has sent the communication request, in the requested communication mode and by the requested communication media when in the response-permitted apparatus information storage the sender apparatus is associated with the communication mode requested by the communication request and the communication media requested by the communication request.

5. The communications apparatus according to any one of Claims 2 to 4, further comprising:
a user instruction receiving portion for receiving input of instructions from a user,
wherein the user instruction receiving portion receives the input from the user as to whether the communication requested should be permitted or not when the communication controller rejects the communication request.

6. The communications apparatus according to Claim 5, wherein the communication controller permits the communication when the communication controller rejects the communication request and when the input of user instructions received by the user instruction receiving portion approves the communication.

7. The communications apparatus according to Claim 6, wherein the user instruction receiving portion receives the input of user instructions as to the communicationmedia and/or the communication mode, and the communication controller permits communication by the communication media, or in the communication mode, designated by the user.

8. The communications apparatus according to any one of Claims 2 to 4, wherein in a case where transmission of the communication media has been performed, but its reception has not been performed with respect to another communications apparatus, when the apparatus receives a communication request for requesting transmission and reception from said another communications apparatus, the communication controller determines that the communication is permissible.

9. The communications apparatus according to any one of Claims 2 to 4, wherein in a case where transmission of communication audio data has been performed, but its reception has not been performed, with respect to another communications apparatus, when the apparatus receives a communication request for requesting transmission and reception of audio from said another communications apparatus, the communication controller determines that the communication is permissible.

10. The communications apparatus according to any one of Claims 2 to 4, further comprising:
a user instruction receiving portion for receiving input of instructions from a user; and
a transmitter which, when communication of one or more kinds of communication media in the communication mode is designated by the user through the user instruction receiving portion, transmits a communication request for requesting the user-designated communication of the designated communication media in the designated communication mode.

11. The communications apparatus according to any one of Claims 2 to 4, further comprising:
an output portion which, when receiving the communication media from another communication apparatus while presenting non-communication media, switches a presentation of a non-communication media into a presentation of the communication media received from said another communication apparatus.

12. The communications apparatus according to any one of Claims 2 to 4, further comprising:
an audio generation and output portion which, when receiving the communication audio data from another communication apparatus while presenting non-communication audio data, outputs the non-communication audio data in mute mode or at low volume level.

13. The communications apparatus according to any one of Claims 2 to 4, further comprising:
an audio generation and output portion which, by mixing communication audio data received from another communication apparatus and non-communication audio data received from other than said another communication apparatus, outputs the mixed audio.

14. The communications apparatus according to any one of Claims 2 to 4, further comprising:
a first audio generation and output portion for outputting communication audio data received from another communication apparatus; and
a second audio generation and output portion for outputting non-communication audio data received from other than said another communication apparatus.

15. The communications apparatus according to any one of Claims 2 to 4, further comprising:
a video display portion which displays communication video data received from another communication apparatus and non-communication video data received from other than said another communication apparatus, at the same time, presenting one of the video data mainly and the other in an auxiliary manner.
